# EUROPÄISCHE PATENTSCHRIFT

(11) **EP 2 602 602 B1**
(45) Veröffentlichungstag und Bekanntmachung des Hinweises auf die Patenterteilung: **10.08.2016**
(21) Anmeldenummer: 11192687.9
(22) Anmeldetag: 08.12.2011
(51) Int. Cl.: G01M 17/007, G01M 17/04

(54) **Fahrzeugprüfstand**
Vehicle test bench
Banc de test de véhicule

(43) Veröffentlichungstag der Anmeldung: 12.06.2013
(73) Patentinhaber: Hug, Joachim, 38678 Clausthal-Zellerfeld (DE); Henze, Sven, 38678 Clausthal-Zellerfeld (DE)
(72) Erfinder: Hug, Joachim, 38678 Clausthal-Zellerfeld (DE); Henze, Sven, 38678 Clausthal-Zellerfeld (DE)
(74) Vertreter: REHBERG HÜPPE + PARTNER

(56) Entgegenhaltungen:
- WO-A2-03/095966
- DE-A1-102004 063 041
- DE-A1-102010 017 198
- DE-B4- 10 212 255

## Beschreibung

### TECHNISCHES GEBIET DER ERFINDUNG

Die Erfindung betrifft einen Prüfstand für ein Fahrzeug. Bei dem Fahrzeug kann es sich um ein beliebiges Fahrzeug mit beliebig vielen Rädern oder Ketten, so bspw. auch ein Fahrrad oder Flugzeug, handeln. Vorzugsweise handelt es sich bei dem Fahrzeug allerdings um ein Kraftfahrzeug, insbesondere ein Motorrad, einen Pkw, ein Nutzfahrzeug, ein Arbeitsfahrzeug, ein Schienenfahrzeug, einen Gabelstapler u. ä.

Die im Rahmen der Entwicklung eines neuen Fahrzeugs erfolgende Prüfung des Fahrzeugs erfolgt einerseits durch Versuche an einem Fahrzeugprüfstand sowie andererseits durch Fahrversuche. Insbesondere da Fahrversuche
- aufwendig und kostenintensiv sind,
- eine unter Umständen reduzierte Reproduziergenauigkeit aufweisen
- und/oder nicht die Möglichkeit einer beliebigen Überhöhung der Prüflasten zulassen,
ist es wünschenswert, die Prüfung am Fahrzeugprüfstand so weit möglich auszuweiten.

Gattungsgemäße Prüfstände werden eingesetzt, um auch ohne tatsächlichen Fahrbetrieb über simulierte Lasten Rückschlüsse auf die Auswirkungen von im Fahrbetrieb auftretenden Belastungen einerseits auf die Betriebsfestigkeit der beteiligten Bauteile und andererseits auf das Schwingungsverhalten des Fahrzeugs ziehen zu können. Im theoretischen Idealfall würde in einem derartigen ruhenden Prüfstand die Bewegung des Fahrzeugs simuliert, indem die Räder des ruhenden Fahrzeugs abwälzen auf einem endlosen, sich mit der Fahrgeschwindigkeit bewegenden "fliegenden Teppich", wobei Bodenunebenheiten des Fahrwegs durch "Falten" des fliegenden Teppichs simuliert würden. Zusätzlich auf das Fahrzeug wirkende Lasten wie Trägheitskräfte, Seitenführungskräfte, Bremskräfte u. ä. müssten über zusätzliche Aktuatoren erzeugt werden.

### STAND DER TECHNIK

In der Praxis finden Fahrzeugprüfstände Einsatz, in welchen die realen Prüfbedingungen auch bei großem Aufwand nur begrenzt nachgebildet werden können. Bekannt sind so genannte "Flat-Belt-Teststände" mit einem endlosen, mit der simulierten Fahrgeschwindigkeit angetriebenen Fördergurt. Ein einziges Rad, ggf. mit zugeordneter Aufhängung, oder ein Motorrad oder Rennfahrzeug werden festgehalten, während mindestens ein Rad an dem Fördergurt abwälzt. Die Lastsimulation an den Flat-Belt-Prüfständen erfolgt über eine Veränderung der Anpresskraft des Fahrzeugs an den Fördergurt, wobei aber die Möglichkeiten der Lasteinleitung sowie der Simulation von Fahrbahnunebenheiten begrenzt sind.

Des Weiteren bekannt sind so genannte "Dynamometer" oder Leistungsprüfstände, bei welchen ebenfalls das Fahrzeug fixiert ist, während die Räder des Fahrzeugs auf einem bewegten Untergrund, insbesondere einer rotierenden Walze, abwälzen. Über die Aufbringung und Messung eines Antriebs- oder Bremsmoments auf die rotierende Walze kann eine Leistungsprüfung für die Brennkraftmaschine und/oder einen elektrischen Antrieb des Fahrzeugs und/oder die Bremsen des Fahrzeugs erfolgen.

Bekannt sind auch Fahrzeugprüfstände, bei welchen unmittelbar die Fahrzeugachsen für demontierte Räder oder die nicht rotierenden Räder mit Prüflasten beaufschlagt werden. Diese Prüfstände berücksichtigen unter Umständen nicht auf das Fahrzeug wirkende Seitenführungskräfte, Kreiseleffekte an den rotierenden Fahrzeugrädern und/oder Elastizitäten der Fahrzeugräder einschließlich des Reifens auf dem Übertragungsweg von den Aktuatoren zu dem Fahrzeug.

Patent DE 102 12 255 B4 weist darauf hin, dass es vorteilhaft ist, das Fahrzeug in bereiftem Zustand zu prüfen und die Prüflasten über die Fahrzeugreifen in das Fahrzeug einzuleiten. Der Stand der Technik zu Fahrzeugprüfständen wird in DE 102 12 255 B4 wie folgt zusammengefasst:
- Rüttelprüfstände, bei denen Anregungskräfte über Fahrzeugreifen in das Fahrzeug eingeleitet werden, sind beispielsweise aus EP 0 299 217 A2 und DE 33 02 952 A1 bekannt. Bei diesen Prüfständen steht das bereifte Fahrzeug auf vertikal bewegten Radaufstandsflächen. Mit Hilfe von Kolben-Zylinder-Anordnungen kann eine dezidierte vertikale Verschiebung der Radaufstandsflächen und somit ein unterschiedlich hohes Anheben der einzelnen Räder erreicht werden. Allerdings gestatten diese Prüfstände lediglich eine Variation der vertikal wirkenden Aufstandskräfte, während sich diese nicht eignen für eine Simulation der Wirkung von Längs- und Seitenkräften auf das Fahrzeug. Somit lassen sich mit solchen Prüfständen die Einflüsse realer Straßenverhältnisse auf das Fahrzeug nur sehr unvollständig simulieren.
- US 5,604,296 offenbart einen Radaufhängungs-Prüfstand mit einer Radaufstandsplatte, die mit Hilfe von hydraulischen Kolben-Zylinder-Einheiten in vertikaler und horizontaler Richtung verschoben werden kann. Die Druckschrift betrifft den Spezialfall eines Prüfstands für Räder oder Radaufhängungen mit zwei senkrecht zueinander angeordneten, untereinander gekoppelten und quasi-statisch beschriebenen Kolben-Zylinder-Anordnungen. Die Prüfabläufe, denen ein Fahrzeugrad mit Hilfe derartiger Prüfstände unterworfen werden kann, unterscheiden sich jedoch grundlegend von Prüfabläufen, denen ein Gesamtfahrzeug zur Simulation der Bewegung über eine Straße ausgesetzt werden soll, wie dieses im Rahmen der vorliegenden Erfindung erfolgen soll.
- Aus WO 91/09291 A1 ist ein Prüfstand für Fahrzeuge bekannt, bei dem Radaufstandsplatten mit angetriebenen Gurtförderern mit Hilfe von Aktuatoren um die Vertikalachse gedreht werden können. Prüflasten in Vertikal- und Horizontalrichtungen sind mit diesem Prüfstand nicht möglich.
- JP 63 015 136 A1 beschreibt einen Fahrzeugprüfstand mit Radaufstandsplatten, die mit Hilfe von Vibrationsmitteln in Vertikalrichtung antreibbar sind, ohne dass horizontale Prüflasten über die Radaufstandsplatten appliziert werden können.
- WO 98/22790 A1 zeigt einen Fahrzeugprüfstand mit Radaufstandsplatten, die individuell statisch oder dynamisch vertikal und/oder horizontal über Aktuatoren beaufschlagbar sind. WO 98/22790 A1 offenbart nicht, wie konstruktiv eine Beaufschlagungseinheit gestaltet werden müsste, damit eine Beanspruchung mit realitätsnahen Prüflasten, insbesondere für dynamische Simulationsvorgänge mit mehrdimensionalen Auslenkungen und großen Amplituden, gewährleistet werden kann.

Vor diesem Hintergrund offenbart das Patent DE 102 12 255 B4 einen Fahrzeugprüfstand, bei welchem das Fahrzeug mit den Rädern und Reifen jeweils auf Aufnahmeschalen steht. Die Aufnahmeschalen sind über drei lineare Aktuatoren entlang dreier orthogonal zueinander ausgerichteten Raumrichtungen bewegbar, um Radaufstandskräfte, Seitenführungskräfte und Längskräfte über den Reifen in das Fahrzeug einzuleiten. Um eine wälzende Bewegung des Reifens gegenüber den Aufnahmeschalen zu ermöglichen, sind die Grund- und Seitenflächen der Aufnahmeschale mit drehbar gelagerten Zylinderwalzen versehen. Die Seitenflächen der Aufnahmeschalen sind hierbei um einen Winkel von etwa 45° gegenüber der Horizontalen gekippt. Der Abstand der Seitenflächen kann verändert werden, um Reifen unterschiedlicher Abmessungen aufnehmen zu können. Die Räder können eine freie schwingende Bewegung in den Aufnahmeschalen ausführen. Zur Simulation von Brems- und Antriebskräften kann über die vorderen und hinteren Seitenflächen eine in Richtung der Fahrzeuglängsachse des Fahrzeugs wirkende Längskraft eines Aktuators auf den Reifen und damit das Fahrzeug übertragen werden. Ziel des Fahrzeugprüfstands gemäß DE 102 12 255 B4 ist die Prüfung der translatorischen Reaktionen des Fahrzeugs in allen drei Raumrichtungen einschließlich von Wank-, Nick- und Gier-Reaktionen auf beliebige Straßenzustände unter möglichst realitätsnahen Prüfbedingungen. Um eine Anpassung des Fahrzeugprüfstands auf unterschiedliche Fahrzeugmodelle, insbesondere unterschiedliche Radstände und Spurweiten zu ermöglichen, wird vorgeschlagen, die Aktuatoren mit einer Radaufstandsplatte auf einer Basisplatte anzuordnen, welche über hydraulische Verschiebezylinder verschieblich gegenüber einem Fundament gelagert ist. Für eine Entkopplung der unterschiedlichen translatorischen Freiheitsgrade und der Beaufschlagung derselben erfolgt die Kopplung der Aktuatoren mit den Aufnahmeschalen über Zwischenelemente mit Kardangelenken, welche eine Ausgleichsbewegung ermöglichen. Die Bewegung der Aktuatoren wird zur Auswertung über Sensoren, hier induktive Wegaufnehmer, erfasst.

DE 10 2004 063 041 A1 offenbart einen Fahrzeugprüfstand, bei welchem zunächst das Fahrzeug an einem Grundrahmen befestigt wird. Zusätzliche Belastungseinheiten können über Zentrier-Spann-Elemente an den Felgen, Radflanschen, der Radnabe oder dem Rad angreifen. An der Hinterachse wird die Radnabe über teleskopierbare Kardanwellen mit einem Antriebsaggregat gekoppelt. Hingegen erfolgt die Kopplung der Radnaben der lenkbaren Räder der Vorderachse über eine entsprechende teleskopierbare Kardanwelle mit Antriebsaggregaten unter zusätzlicher Zwischenschaltung eines Kreuzschlittens zur Ermöglichung einer Simulation einer Lenkbewegung. Hierbei wird die Lenkbewegung über eine elektromotorische Stelleinheit herbeigeführt. Der aus DE 10 2004 063 041 A1 bekannte Fahrzeugprüfstand ermöglicht somit sowohl die Simulation von Antriebs- und Bremsmomenten an den Radnaben sämtlicher Achsen als auch die Simulation unterschiedlicher Lenkwinkel an den Radnaben der Vorderachse.

DE 10 2010 017 198 A1 offenbart einen Fahrzeugprüfstand, bei welchem der Fahrzeugrahmen über vier Aktuatoren gegenüber dem Fundament abgestützt ist. Über die Aktuatoren können die Anlenkpunkte an dem Fahrzeugrahmen vertikal verstellt werden, so dass je nach Ansteuerung der Aktuatoren eine Höhenveränderung, eine Verkippung um die Längsachse und eine Verkippung quer zur Längsachse simuliert werden kann. Weitere Aktuatoren können eine Einfederung der Fahrzeugräder in vertikaler Richtung simulieren. Die Räder der ungelenkten Hinterachse werden über eine teleskopierbare Kardanwelle von einem Antriebsaggregat angesteuert. Um an den Rädern der Vorderachse auch eine Nachführung in der Höhe und/oder ein Verkippen sowie die Erzeugung einer Lenkbewegung zu ermöglichen, findet hier der Antrieb durch das Antriebsaggregat unter Nutzung einer doppelten Kardanwelle Anwendung. Hierbei ist ein Zwischenstück zwischen Kardangelenken über eine Wellenlagereinrichtung in Ausrichtung quer zur Längsachse des Fahrzeugs geführt. Die Wellenlagereinrichtung kann über eine Zwangsführungseinrichtung parallel zur Fahrzeuglängsachse bewegt werden.

WO 03/095966 A2 offenbart einen Rollenprüfstand, bei welchem Kräfte zwischen einem umlaufenden Band und einem Fahrzeugreifen über Reibung übertragen werden. Der Rollenprüfstand ist hier mit Aktuatoren zur Erzeugung von Kräften in sämtliche Raumrichtungen sowie Momenten in sämtliche Raumrichtungen ausgestattet, welche dann von dem Rollenprüfstand über die Reibung zwischen Band und Fahrzeugrad auf das Fahrzeug übertragen werden müssen.

### AUFGABE DER ERFINDUNG

Der Erfindung liegt die Aufgabe zugrunde, einen Fahrzeugprüfstand vorzuschlagen, mittels dessen unter Berücksichtigung des Einflusses mindestens eines rotierenden Prüfrads ein Fahrzeug mit dynamischen Prüflasten beaufschlagt werden kann. Hierbei soll der Fahrzeugprüfstand insbesondere hinsichtlich
- der Möglichkeit einer Einleitung von Prüflasten in das Prüfrad (bspw. eine Seitenführungskraft, eine Radaufstandskraft, eine Fahrzeuglängskraft und/oder eine Trägheitskraft bei Beschleunigung oder Abbremsung des Fahrzeugs oder Kurvenfahrt),
- des Einflusses der dynamischen Effekte des rotierenden Prüfrads,
- des Einflusses der mechanischen Parameter des Prüfrades wie eine Steifigkeit und Dämpfung des Prüfrades, insbesondere des Reifens,
- des Kraftflusses von mindestens einem Aktuator zu dem Prüfrad und dem Fahrzeug,
- der Nutzung des Fahrzeugprüfstands für eine Vielzahl von Fahrzeugen gleicher oder unterschiedlicher Abmessungen und/oder
- der Variabilität hinsichtlich der Prüfbedingungen
verbessert werden.

### LÖSUNG

Die Aufgabe der Erfindung wird erfindungsgemäß mit den Merkmalen des unabhängigen Patentanspruchs 1 gelöst. Weitere bevorzugte erfindungsgemäße Ausgestaltungen sind den abhängigen Patentansprüchen zu entnehmen.

### BESCHREIBUNG DER ERFINDUNG

Die vorliegende Erfindung betrifft einen Fahrzeugprüfstand, mit welchem eine realitätsnahe dynamische Beanspruchung eines Fahrzeugs erfolgen soll. Mindestens eine Beaufschlagungseinheit für ein Prüfrad verfügt über mindestens einen Aktuator, der an dem Prüfrad im Fahrbetrieb wirkende Prüflasten simuliert.

Bei dem Prüfrad kann es sich um ein Original-Rad des Fahrzeugs handeln mit der Original-Felge und dem zugeordneten Reifen. Ebenfalls möglich ist, dass das Prüfrad auf eine Original-Felge reduziert ist, ggf. mit Anbauelementen, die beispielsweise auch die Eigenschaften des nicht vorhandenen Reifens nachbilden können. Durchaus möglich ist aber auch, dass das Prüfrad ein gegenüber dem Original-Rad modifiziertes, lediglich zu den Prüfzwecken hergestelltes und genutztes Prüfrad ist, dessen Gestaltung geeignet angepasst ist, um einerseits die Wirkung des Original-Rads anzunähern und andererseits die Montage und Kopplung sowie die Demontage mit dem Fahrzeugprüfstand ermöglicht.

Neben dem mindestens einen Aktuator verfügt die Beaufschlagungseinheit über ein Antriebsaggregat, welches zum Antrieb des Prüfrads mit einer Antriebsdrehzahl mit dem Prüfrad in Antriebsverbindung steht. Hierbei wird über die Antriebsdrehzahl die Fahrgeschwindigkeit im realen Fahrbetrieb simuliert. Vorzugsweise werden sämtliche Prüfräder mit derselben Antriebsdrehzahl angetrieben. Möglich ist auch, dass Prüfräder einer im Fahrbetrieb angetriebenen Achse von dem Antriebsaggregat des Fahrzeugs angetrieben werden.

Erfindungsgemäß wird in dem Fahrzeugprüfstand eine Steuervorrichtung eingesetzt, über welche gleichzeitig der Antrieb des Prüfrads durch das Antriebsaggregat mit der Antriebsdrehzahl und die Simulation der Prüflast an dem Prüfrad durch den mindestens einen Aktuator ansteuerbar ist. Hierbei umfasst ein Steuern auch eine Regelung. Des Weiteren umfasst von einer Steuervorrichtung im Sinne der vorliegenden Erfindung ist auch eine Steuervorrichtung, welche mit mehreren, unter Umständen verteilt angeordneten und/oder miteinander kommunizierenden einzelnen Steuereinheiten ausgebildet ist. Über die Steuervorrichtung wird möglicherweise einerseits der Antrieb des Prüfrads durch das Antriebsaggregat mit der Antriebsdrehzahl angesteuert, während der Aktuator in diesem Steuerzustand keine Prüflast simuliert. In einem anderen Steuerzustand erfolgt kein Antrieb des Prüfrads durch das Antriebsaggregat mit der Antriebsdrehzahl, während sehr wohl eine Simulation der Prüflast an dem Prüfrad durch den mindestens einen Aktuator erfolgt. Schließlich wird durch die Steuervorrichtung auch ein Steuerzustand ermöglicht, in welchem die Steuervorrichtung simultan sowohl den Antrieb des Prüfrads durch das Antriebsaggregat mit der Antriebsdrehzahl als auch die Simulation der Prüflast an dem Prüfrad durch den mindestens einen Aktuator ansteuert, wobei mittels der Steuervorrichtung auch eine Koordinierung der Prüflast sowie des Antriebsmoments bzw. der Antriebsdrehzahl erfolgen kann.

Der vorliegenden Erfindung liegt insbesondere die Erkenntnis zugrunde, dass zwar mittels der drei Aktuatoren gemäß DE 102 12 255 B4 Radaufstandskräfte, Seitenführungskräfte und Längskräfte in den Reifen und damit in das Fahrzeug eingeleitet werden können, womit eine Simulation von translatorischen Reaktionen des Fahrzeugs in sämtliche Raumrichtungen sowie die Wank-Nick- und Gierreaktionen simuliert werden können. Allerdings ist im Rahmen der der Erfindung zugrunde liegenden Untersuchungen festgestellt worden, dass die reine Prüfung mit Einleitung von Kräften in das Fahrzeug im Bereich der Kontaktflächen zwischen Auffangschale gemäß DE 102 12 255 B4 und Reifen signifikante Beanspruchungen des Fahrzeugs und signifikante Einflussgrößen vernachlässigt:
- Nicht simuliert werden kann gemäß DE 102 12 255 B4 an dem Fahrzeug der Einfluss von Beanspruchungen des Fahrzeugs, welche entstehen durch eine etwaige Unwucht des Fahrzeugrads.
- Des Weiteren besitzt das Fahrzeugrad unter Umständen ein Steifigkeits- und Dämpfungsverhalten, welches abhängig ist vom Drehwinkel des Fahrzeugrads. Derartige richtungsabhängige Charakteristika des Fahrzeugreifens im Kraftfluss von der Fahrbahn bzw. den Aktuatoren zu dem Fahrzeug werden für einen Fahrzeugprüfstand gemäß DE 102 12 255 B4 vernachlässigt.
- Kreiseleffekte des Fahrzeugrads werden gemäß DE 102 12 255 B4 ebenfalls außer Acht gelassen. Um lediglich ein Beispiel zu nennen, führt die Rotation des Fahrzeugrads mit der Antriebsdrehzahl zu einer Drallstabilisierung, welche abhängig ist vom Massenträgheitsmoment des Fahrzeugrads und von der Drehzahl des Fahrzeugrads. Ebenso hat eine Richtungsänderung der Achse eines rotierenden Körpers wie des Prüfrads durch ein äußeres Moment an sich eine Präzession zur Folge, welche durch die Anbindung des Fahrzeugrads an dem Fahrzeug aufgenommen und verhindert werden muss, wenn beispielsweise die Drehachse des rotierenden Prüfrads geändert wird infolge einer Lenkbewegung und/oder des Einfederns des Fahrzeugrads. Dies führt zu Beanspruchungen des Fahrzeugs, welche mittels eines Fahrzeugprüfstands gemäß DE 102 12 255 B4 nicht untersucht werden können.

Im Rahmen der vorliegenden Erfindung kann der Kraftfluss von dem Antriebsaggregat zu dem Prüfrad und der Kraftfluss der Beaufschlagungseinheit zu dem Prüfrad beliebig ausgestaltet sein. Für einen Vorschlag der Erfindung erfolgt eine Entkopplung des Kraftflusses von dem Antriebsaggregat zu dem Prüfrad von dem Kraftfluss der Beaufschlagungseinheit für die Prüflasten zu dem Prüfrad, so dass eine Wechselwirkung, welche zu Fehlereinflüssen führen könnte, ausgeschlossen ist und die jeweiligen Kraftflüsse gezielt an die unterschiedlichen Beaufschlagungen angepasst werden können.

In weiterer Ausgestaltung dieses Grundgedankens schlägt die Erfindung vor, dass der Kraftfluss von dem Antriebsaggregat zu dem Prüfrad über eine Gelenkwelle erfolgt. Diese Gelenkwelle kann auch durch den Aktuator verursachte Bewegungen des Prüfrads ausgleichen. Hingegen erfolgt für diese Ausgestaltung der Kraftfluss der Beaufschlagung zu dem Prüfrad über einen Radhaltekörper, über welchen dann insbesondere die Seitenführungskraft, die Radaufstandskraft, eine Längskraft und/oder eine Lenkkraft auf das Prüfrad aufgebracht wird.
In einer alternativen Ausgestaltung der Erfindung wird vorgeschlagen, dass das mindestens eine Prüfrad drehbar in einem Radhaltekörper aufgenommen ist, wobei beispielsweise der Radhaltekörper zumindest teilweise in der Radebene des Prüfrads das Prüfrad umschließt oder mit diesem in unterschiedlichen Umfangsbereichen in Wechselwirkung tritt, während in anderen Umfangsbereichen keine Wechselwirkung zwischen dem Radhaltekörper und dem Prüfrad vorhanden sein kann.
Wenn das Prüfrad auf gegenüberliegenden Seiten gegenüber den Wälzkörpern und dem Grundkörper des Radhaltekörpers abgestützt ist, kann das Prüfrad nicht infolge der dynamischen Beanspruchung von dem Grundkörper des Radhaltekörpers "abheben", wie dies beispielsweise für die Auffangschale gemäß DE 102 12 255 B4 der Fall ist.

Bei der Erfindung ist das Prüfrad verteilt über den Umfang an mehreren Wälzkörpern abgestützt, welche gegenüber einem Grundkörper des Radhaltekörpers gelagert sind. Hierbei ist das Prüfrad auf gegenüberliegenden Seiten spielfrei an den mehreren Wälzkörpern abgestützt. Möglich ist, dass die Abstützung zwischen Prüfrad und Wälzkörpern ohne verbleibenden Freiheitsgrad in radialer Richtung zur Rotationsachse des Prüfrads erfolgt. Ebenfalls möglich ist, dass für eine elastische Ausgestaltung des Prüfrads, der Wälzkörper und/oder der Abstützung der Wälzkörper gegenüber dem Grundkörper des Radhaltekörpers das Prüfrad spielfrei zwischen den Wälzkörpern abgestützt ist, während unter Ausnutzung der genannten Elastizität bei ausreichender Aufbringung von Prüflasten durchaus radiale Verschiebungen des Prüfrads gegenüber dem Grundkörper des Radhaltekörpers ermöglicht sein können.
Um lediglich ein weiteres Beispiels zu nennen, kann der Radhaltekörper einen hohlzylinderförmigen oder trommelförmigen Grundkörper besitzen, an welchem die Wälzkörper gelagert sind. Eine weniger massive Bauform kann sich im Rahmen der vorliegenden Erfindung ergeben, wenn der Radhaltekörper mit mindestens einem Arm ausgebildet ist, an welchem radial außenliegend ein Wälzkörper gelagert ist, an welchem das Prüfrad abwälzt. Hierbei erstreckt sich beispielsweise der Arm von der Rotationsachse des Prüfrads radial nach außen bis zur Mantelfläche des Prüfrads oder über diese hinaus, wo dann mindestens ein Wälzkörper an dem Arm gelagert ist. In diesem Fall kann der Wälzkörper auch frei auskragend an dem Arm gelagert sein. Möglich ist aber auch, dass der Wälzkörper auf der dem Arm gegenüberliegenden Seite, vorzugsweise innerhalb des Radkastens, an einem weiteren Abstützelement abgestützt ist, beispielsweise an einem mehrere Wälzkörper lagernden Ring oder an einem weiteren Arm.

Für den Fall, dass der Fahrzeugprüfstand ohne größere Umbaumaßnahmen und Austausch des Radhaltekörpers mit den Wälzkörpern für unterschiedliche Prüfräder genutzt werden soll, ist es von Vorteil, wenn der Abstand mindestens eines Wälzkörpers von der Drehachse des Prüfrads nicht fest vorgegeben ist, sondern dieser einstellbar ist. Hierbei kann es unter Umständen ausreichen, wenn nur eine Teilmenge der Wälzkörper einen veränderlichen und einstellbaren Abstand von der Drehachse des Prüfrads besitzt.

Für eine bevorzugte Ausgestaltung der Erfindung ist das Prüfrad mit dem Reifen gebildet, welcher dann eine Elastizität des Prüfrads bildet, welche tatsächlich auch im tatsächlichen Fahrbetrieb vorhanden ist. Das Prüfrad mit dem Reifen ist für diese Ausgestaltung der Erfindung radial und/oder axial in dem Radhaltekörper des Reifens verspannt. Dies kann erfolgen durch radiale und/oder axiale Bewegung von entsprechenden Einspannelementen des Radhaltekörpers, wobei diese Einspannelemente auch eine relative Verdrehung zwischen Radhaltekörper und Prüfrad ermöglichen können. Ebenfalls möglich ist, dass der Reifen radial und/oder axial zwischen Begrenzungen des Radhaltekörpers aufgenommen ist und das Verspannen durch Aufblasen des Reifens erfolgt.

Eine weitere Ausgestaltung der Erfindung widmet sich der Entkopplung des Kraftflusses von dem Antriebsaggregat zu dem Prüfrad von dem Kraftfluss der Beaufschlagungseinheit für die Prüflasten zu dem Prüfrad. Für eine Ausgestaltung der Erfindung besitzt der Radhaltekörper eine Ausnehmung, welche vorzugsweise als Durchgangsbohrung des Radhaltekörpers ausgebildet ist, welche sich koaxial zur Rotationsachse des Prüfrads erstreckt. Durch diese Ausnehmung erstreckt sich ein Antriebselement für das Prüfrad, welches mit dem Antriebsaggregat gekoppelt ist, ohne Kontakt mit dem Radhaltekörper hindurch, so dass unabhängig von einer etwaigen Bewegung des Radhaltekörpers infolge der Prüflasten ein Antrieb des Prüfrads durch die Ausnehmung hindurch möglich ist.

Für eine alternative Ausgestaltung der Erfindung ist in oder an einem Radhaltekörper das Prüfrad drehfest gehalten. In diesem Fall ist der Radhaltekörper drehbar an einem Lager- und Beaufschlagungskörper gelagert. Die drehbare Lagerung des Radhaltekörpers gegenüber dem Lager- und Beaufschlagungskörper kann wahlweise in der Radebene oder außerhalb derselben angeordnet sein, wobei im letztgenannten Fall der Lager- und Beaufschlagungskörper vorzugsweise den Kraftfluss um das Rad herum in die Radebene umleitet. Der mindestens eine Aktuator beaufschlagt den Lager- und Beaufschlagungskörper mit mindestens einer Prüflast. Sowohl der Kraftfluss von dem Antriebsaggregat als auch der Kraftfluss von dem mindestens einen Aktuator zur Erzeugung der Prüflasten verläuft in diesem Fall über den Radhaltekörper zu dem Prüfrad.

Die Erfindung nimmt unter Umständen bewusst in Kauf, dass der Radhaltekörper eine Zusatzmasse bilden kann, welche mit den Prüflasten beaufschlagt werden muss. Beispielsweise stellt die Masse des Radhaltekörpers eine Zusatzmasse dar, welche die Eigenkreisfrequenz der Aufhängung verändern kann. Allerdings kann erfindungsgemäß der Radhaltekörper einerseits optimiert werden für das optimale Halten des Prüfrads. Andererseits kann der Radhaltekörper geeignet gestaltet werden, um eine optimale Einleitung der Prüflasten und/oder des Antriebsmoments für das Antreiben des Prüfrads mit der Antriebsdrehzahl zu ermöglichen.

Um lediglich ein Beispiel zu nennen, kann es sich bei dem Antriebsaggregat um einen elektrischen Motor handeln. Unter Umständen dient ein derartiges Antriebsaggregat nicht allein dem Antrieb des zugeordneten Prüfrads. Ebenfalls möglich ist, dass über ein derartiges Antriebsaggregat auch ein Bremsmoment auf die Prüfräder aufgebracht wird, was entgegen der Rotation der trägen Masse des Prüfrads mit Radhaltekörper erfolgen kann oder entgegen des Antriebs durch ein Antriebsaggregat, beispielsweise eine Brennkraftmaschine oder ein elektrisches Antriebsaggregat des Fahrzeugs. Möglich ist aber auch, dass in dem Fahrzeugprüfstand anstelle des Antriebsaggregats des Fahrzeugs, insbesondere der Brennkraftmaschine, ein bspw. elektrisches Ersatzaggregat eingesetzt ist, welches hinsichtlich der Steuerung des Antriebs optimiert sein kann oder auch eine Rückgewinnung von Energie in einem Bremsbetrieb ermöglicht.

Der erfindungsgemäße Fahrzeugprüfstand verfügt über mindestens einen Aktuator. Über diesen Aktuator ist der Lager- und Beaufschlagungskörper (und damit auch der Radhaltekörper und das Prüfrad) mit mindestens einer Prüflast beaufschlagbar.

Über den mindestens einen Aktuator kann eine beliebig orientierte Prüflast auf den Lager- und Beaufschlagungskörper aufgebracht werden, wobei im Sinne der vorliegenden Anmeldung unter einer Prüflast oder einer Kraft auch eine verallgemeinerte Kraft, also eine Kraft oder ein Moment, verstanden wird. Des Weiteren umfasst der Begriff "Prüflast" neben einer verallgemeinerten Kraft auch eine Verschiebung, welche eine das Fahrzeug beanspruchende Kraft zur Folge hat. So führt beispielsweise eine vertikale Verschiebung eines Radaufstandspunkts bzw. einer Rotationsachse des Prüfrads und des Radhaltekörpers in vertikaler Richtung in der Aufhängung des Prüfrads zu einer Vertikalkraft, mit welcher das Fahrzeug beaufschlagt wird.

Erfindungsgemäß ist über den mindestens einen Aktuator als Prüflast eine Längskraft und/oder eine Seitenführungskraft auf den Lager- und Beaufschlagungskörper aufbringbar, wobei zusätzlich auch eine Radaufstandskraft und/oder eine Lenkkraft auf den Lager- und Beaufschlagungskörper aufbringbar ist. Beispielsweise kann die Aufbringung der Seitenführungskraft eine statische oder dynamische Beanspruchung zur Folge haben, die in Fahrzeugquerrichtung beabstandet von der Drehachse des Prüfrads wirkt. Über die Aufbringung einer vertikal orientierten Radaufstandskraft kann ein Ein- und Ausfedern des Fahrzeugrads simuliert werden, welches im tatsächlichen Fahrbetrieb hervorgerufen ist durch Fahrbahnunebenheiten und/oder Trägheitskräfte, die zu einer Nickbewegung um eine Fahrzeugquerachse oder eine Neigungsbewegung um eine Fahrzeuglängsachse bei Kurvenfahrt führen können.

Erfindungsgemäß kann grundsätzlich die Radaufstandskraft mit beliebiger Wirkachse in den Lager- und Beaufschlagungskörper eingeleitet werden. Für eine vorteilhafte Weiterbildung der Erfindung verläuft die vertikale Wirkachse für die Radaufstandskraft allerdings durch die Drehachse des Radhaltekörpers und durch einen imaginären Aufstandspunkt des Prüfrads, welcher den Aufstandspunkt des Rads des Fahrzeugs im Fahrbetrieb approximiert oder diesem entspricht. Hierdurch kann die Radaufstandskraft besonders realitätsnah in das Fahrzeug eingeleitet werden.

Auch eine etwaige Seitenführungskraft kann grundsätzlich mit beliebiger Wirkachse in den Lager- und Beaufschlagungskörper eingeleitet werden. Besonders realitätsnah wird die Seitenführungskraft allerdings in den Lager- und Beaufschlagungskörper eingeleitet, wenn die Wirkachse der Seitenführungskraft durch den Aufstandspunkt des Prüfrads verläuft.

Für die Integration des Antriebsaggregats für das Antreiben des Radhaltekörpers mit der Antriebsdrehzahl in dem Fahrzeugprüfstand gibt es vielfältige Möglichkeiten. Um lediglich ein (nicht beschränkendes) Beispiel zu nennen, kann ein Stator des dann elektrischen Antriebsaggregats unmittelbar in den Lager- und Beaufschlagungskörper integriert sein, während der Rotor des elektrischen Antriebsaggregats von dem Radhaltekörper getragen ist. Für eine besondere erfindungsgemäße Ausgestaltung ist das Antriebsaggregat über eine Doppel-gelenkwelle mit dem Radhaltekörper gekoppelt, wobei die Doppelgelenkwelle vorzugsweise in Z-Anordnung eingesetzt ist. Über die Doppelgelenkwelle können relative Verschiebungen und Winkel zwischen dem Radehaltekörper und einer Abtriebswelle des Antriebsaggregats ausgeglichen werden, wie diese insbesondere auftreten können infolge einer Einfederung des Prüfrads, einer Sturzänderung mit der Einfederung, eines Lenkwinkels etwaiger gelenkter Prüfräder u. ä. Sofern auch eine Längenveränderung der Doppelgelenkwelle erforderlich ist, kann die Doppelgelenkwelle auch mit einem axialen Freiheitsgrad ausgestattet sein.

Ein weiterer Aspekt der Erfindung beschäftigt sich mit der Art der drehfesten Verbindung zwischen Prüfrad und Radhaltekörper. Hierbei sind grundsätzlich beliebige drehfeste Halteverbindungen einsetzbar. Unter einer drehfesten Verbindung wird in diesem Zusammenhang auch eine elastische Verbindung, bspw. über einen Reifen oder ein Ersatzbauteil mit entsprechender Torsionssteifigkeit, verstanden, solange diese Verbindung ermöglicht, dass das Prüfrad über den Radhaltekörper mit der Antriebsdrehzahl angetrieben wird.

Gemäß einer ersten besonderen Ausgestaltung der Erfindung erfolgt ein axiales und/oder radiales Verspannen des Prüfrads in dem Radhaltekörper durch ein Aufpumpen eines Reifens des Prüfrads. Ist beispielsweise der Radhaltekörper als Radaufnahmekörper mit einer zylindrischen Innenfläche ausgebildet, kann der Radhaltekörper für nicht aufgepumpten Reifen über das Prüfrad und den Reifen gestülpt werden. Mit dem Aufpumpen des Reifens verändert sich dessen Durchmesser, so dass mit zunehmenden Aufpumpen die Mantelfläche des Reifens an die zylindrische Innenfläche des Radaufnahmekörpers gepresst wird. Mit zunehmender radialer Anpresskraft können dann zunehmend Umfangskräfte, also Radantriebskräfte, zwischen Radhaltekörper und Prüfrad reibschlüssig übertragen werden. Entsprechendes gilt für ein axiales Verspannen in Richtung der Rotationsachse des Prüfrads - ist hier der Reifen axial zwischen zwei Absätzen des Radaufnahmekörpers gefangen, ändert sich mit dem Aufpumpen des Reifens eine axiale Erstreckung des Reifens, womit auch ein axiales Verspannen erfolgen kann.

Für eine alternative oder kumulative Ausgestaltungsform der Erfindung ist das Prüfrad im Bereich einer Felge an dem Radhaltekörper befestigt. Hierbei kann es sich um die Original-Felge handeln oder eine extra für die Befestigung des Radhaltekörpers angepasste Felge. Im einfachsten Fall wird für die Befestigung die Befestigung der Felge an dem Achskörper mittels der Radbolzen genutzt, so dass, beispielsweise für verlängerte Radbolzen, zusätzlich zu der Felge auch der Radhaltekörper mit den Radbolzen an die Achse des Fahrzeugs angekoppelt wird. Ebenfalls möglich ist auch, dass an anderen Stellen der Felge, vorzugsweise weiter radial außenliegend, der Radhaltekörper unabhängig von den Radbolzen an die Felge befestigt ist.

Für eine weitere Ausgestaltungsform der Erfindung findet ein Koppelkörper des Radhaltekörpers Einsatz, wobei der Koppelkörper an einer Mantelfläche der Felge befestigt ist. Hierbei kann die Befestigung zwischen Koppelkörper und Mantelfläche der Felge beliebig sein, beispielsweise stoffschlüssig, reibschlüssig durch ein axiales und/oder radiales Verspannen, oder durch eine Verschraubung des Koppelkörpers mit der Mantelfläche der Felge.

Durchaus möglich ist, dass das Fahrzeug ausschließlich über Radhaltekörper gegenüber der Umgebung abgestützt ist. Für eine Weiterbildung der Erfindung wird allerdings vorgeschlagen, dass das Kraftfahrzeug zusätzlich zu dem mindestens einen Radhaltekörper über eine zentrale Abstützung gegenüber der Umgebung abgestützt ist. Um lediglich ein einfaches Beispiel zu nennen, fixiert die zentrale Abstützung den Schwerpunkt des Fahrzeugs in sämtliche Raumrichtungen, während die zentrale Abstützung Verschwenkungen des Fahrzeugs um die drei Raumachsen ermöglicht.

Das Prüfspektrum des erfindungsgemäßen Fahrzeugprüfstands kann erweitert werden, wenn die zentrale Abstützung mit einem zentralen Aktuator ausgebildet ist. Über den zentralen Aktuator sind zusätzlich zu der Einleitung von Prüflasten über die Radhaltekörper Kräfte in das Fahrzeug einleitbar. Wird beispielsweise über eine zentrale Abstützung mit zentralem Aktuator im Bereich des Schwerpunkts eine Längskraft in das Fahrzeug eingeleitet, kann hierdurch eine Nickbewegung des Fahrzeugs bei einer Bremsung des Fahrzeugs simuliert werden. Entsprechendes gilt für Beschleunigungsvorgänge oder Seitenbeschleunigungen bei Kurvenfahrt, die über einen Aktuator mit einer Querkraft simuliert werden können, u. ä.

Der zentrale Aktuator kann hier mit beliebigen, an sich bekannten Aktuatoren ausgebildet sein. Gemäß einer besonderen Ausgestaltung der Erfindung ist der zentrale Aktuator mit mindestens einem aufblasbaren Kissen oder Luftbalg oder einer beliebigen Kopplung mit dem Karosserierahmen gebildet, so dass je nach Druckbeaufschlagung des Kissens oder Luftbalgs eine Kraft von dem zentralen Aktuator auf das Kraftfahrzeug ausgeübt wird. In alternativer Ausgestaltung kann der zentrale Aktuator auch mit einem geeigneten Betätigungsgestänge ausgebildet sein.

Während durchaus möglich ist, dass der Fahrzeugprüfstand lediglich eine Prüfung des Fahrzeugs für eine Geradeausfahrt simuliert, können die Einsatzmöglichkeiten des Fahrzeugprüfstand und die Anpassung der Prüfbedingungen an den realen Fahrbetrieb für eine Weiterbildung der Erfindung erweitert werden, indem der Radhaltekörper zur Simulation eines Lenkwinkels und/oder einer Lenkbewegung des Prüfrads um eine Vertikalachse verschwenkbar sein. Möglich ist hierbei, dass ein Lenkwinkel konstant vorgebbar ist, so dass der Fahrzeugprüfstand für diesen Lenkwinkel fixiert wird. Von Vorteil ist allerdings unter Umständen, wenn über einen Aktuator der Schwenkwinkel um die Vertikalachse im Prüfbetrieb veränderbar ist, wodurch automatisiert der Einfluss unterschiedlicher Lenkwinkel simuliert werden kann und/oder auch Kräfte simuliert werden können, welche im Zuge der Lenkbewegung des Prüfrads auftreten.

Möglich ist, dass mit einer Veränderung des Lenkwinkels eine Veränderung der Position und Ausrichtung des Radhaltekörpers einerseits und der Abtriebswelle des Antriebsaggregats andererseits eintritt. In diesem Fall sind geeignete Maßnahmen für einen Winkelausgleich, eine Längenänderung und einen Winkelversatz zwischen Radhaltekörper und Abtriebswelle des Antriebsaggregats zu treffen, wie diese anhand des Einsatzes einer Doppelgelenkwelle, ggf. mit zusätzlichem axialem Freiheitsgrad, zuvor erläutert worden sind. Für einen besonderen Vorschlag der Erfindung ist allerdings das Antriebsaggregat, über welches der Radhaltekörper mit einer Antriebsdrehzahl antreibbar ist, gemeinsam mit dem Radhaltekörper zur Simulation eines Lenkwinkels und/oder eine Lenkbewegung des Prüfrads um eine gemeinsame Vertikalachse verschwenkbar. Um auch hier lediglich ein (nicht beschränkendes) Beispiel zu nennen, kann das Antriebsaggregat auf einer Abstützplatte abgestützt sein, welche um die Vertikalachse zur Veränderung des Lenkwinkels verschwenkt werden kann. Mit dieser Abstützplatte wird dann auch der Lager- und Beaufschlagungskörper im Zuge der Veränderung des Lenkwinkels gemeinsam verschwenkt. Zu diesem Zweck ist der Lager- und Beaufschlagungskörper unter Umständen drehfest um die Vertikalachse mit der Abstützplatte gekoppelt, während zwischen Abstützplatte und Lager- und Beaufschlagungskörper durchaus vertikale Relativbewegungen möglich sein können, um Radaufstandskräfte simulieren zu können.

Für die Erzeugung der Prüflasten können beliebige Aktuatoren Einsatz finden. Um nur einige wenige Beispiele zu nennen, können hydraulische oder pneumatische Zylinder eingesetzt werden. Ebenfalls möglich ist der Einsatz elektromagnetischer Shaker oder elektrodynamischer Aktuatoren. Hierbei kann jeweils ein Aktuator zur Erzeugung eines Typs einer Prüflast, also beispielsweise für eine Seitenführungskraft, eine Radaufstandskraft oder eine Lenkkraft zuständig sein. Entsprechendes gilt für die Ausbildung eines zentralen Aktuators. Für einen weiteren Vorschlag der Erfindung ist mindestens ein Aktuator und/oder der zentrale Aktuator mit einem so genannten "Hexapod" gebildet. Wird ein Lager- und Beaufschlagungskörper über einen derartigen Hexapod abgestützt, kann entsprechend der Ansteuerung mehrerer Aktuatoren des Hexapods, die vorzugsweise unterschiedliche Wirklinien in einem affinen Koordinatensystem besitzen, ein Antriebspunkt des Hexapoden mit dem Lager- und Beaufschlagungskörper in eine beliebige Position im Raum gesteuert werden. Hinsichtlich derartiger Hexpoden gibt es unter Umständen vorgefertigte Baueinheiten mit zugeordneter Steuerung oder Regelung, so dass beispielsweise für eine Aufbringung eines vorgegebenen Kraftverlaufs der Radaufstandskraft über die Steuerung oder Regelung der Hexapod in die zugeordneten Vertikalpositionen gesteuert wird.

Wie eingangs erläutert, kann der Radhaltekörper beliebig ausgebildet sein. Um einige (nicht beschränkende) Beispiele zu nennen, kann der Radhaltekörper mit mehreren sich radial erstreckenden Fingern ausgebildet sein, wobei die Endbereiche der Finger mit einer Felge oder einer Mantelfläche eines Reifens zwecks Gewährleistung der Befestigung in Wechselwirkung treten. In besonderer Ausgestaltung der Erfindung ist der Radhaltekörper als Radaufnahmekörper ausgebildet. Dieser Radaufnahmekörper umgibt eine Felge oder einen Reifen des Prüfrads, so dass in diesem Fall der Radaufnahmekörper auch in den Innenraum eines Radkastens eintritt. Eine derartige Ausgestaltung hat vielfältige mögliche Vorteile. So erfolgt beispielsweise für das Prüfrad umgebenden Radaufnahmekörper die Erzeugung der Haltekräfte zwischen Radaufnahmekörper und Prüfrad radial weit außenliegend, so dass große Prüflasten übertragen werden können. Verbessert werden kann auch die Führung der Rotationsbewegung des Prüfrads durch den Radaufnahmekörper. Der Radaufnahmekörper kann darüber hinaus für ein Versagen des Prüfrads oder des Reifens auch eine Schutzfunktion erfüllen. Möglich ist, dass der Einsatz eines den Reifen des Prüfrads umgebenden Radaufnahmekörpers auch eine einfache Anpassung an unterschiedliche Prüfradgrößen und Reifengrößen ermöglicht.

Von Vorteil ist eine erfindungsgemäße Ausgestaltung, bei welcher ein Kraftfluss für eine Beaufschlagung des Fahrzeugs mit einer Prüflast
- von einem Aktuator, beispielsweise einem vertikal wirkenden Aktuator zur Simulation einer Radaufstandskraft,
- über den Lager- und Beaufschlagungskörper,
- das Lager zwischen dem Lager- und Beaufschlagungskörper und dem Radhaltekörper oder Radaufnahmekörper und
- den Radhaltekörper oder Radaufnahmekörper
- zu dem Prüfrad
erfolgt. Hierbei ermöglicht das Lager die erforderliche relative Verdrehung zwischen dem Lager- und Beaufschlagungskörper und dem Radhaltekörper oder Radaufnahmekörper.

Vorzugsweise ist der Lager- und Beaufschlagungskörper L-förmig ausgebildet. In einem Endbereich des Vertikalschenkels des L ist das Lager angeordnet. Ein Endbereich des Horizontalschenkels des L ist geringfügig unterhalb eines imaginären Aufstandspunkts des Prüfrads angeordnet. Somit kann einerseits die Prüflast nahezu in dem imaginären Aufstandspunkt des Prüfrads eingeleitet werden, wodurch besonders realitätsnahe Prüfbedingungen gewährleistet werden. Andererseits wird über den Lager- und Beaufschlagungskörper die Prüflast von dem imaginären Aufstandspunkt weg und um einen Teil des Prüfrads zu dem Lager "umgeleitet", wodurch die Übertragung der Prüflast dann über den rotierenden Radhaltekörper ermöglicht wird.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden sein können, ohne dass es einer expliziten Verwendung des Adverbs "mindestens" bedarf. Wenn also beispielsweise von einem Prüfrad, eine Prüflast oder einer Beaufschlagungseinheit die Rede ist, ist dies so zu verstehen, dass
- genau ein Prüfrad, eine Prüflast oder eine Beaufschlagungseinheit,
- zwei Prüfräder, Prüflasten oder Beaufschlagungseinheiten oder
- mehr Prüfräder, Prüflasten oder Beaufschlagungseinheiten
vorhanden sein können.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schräg von oben eine räumliche Ansicht eines erfindungsgemäßen Fahrzeugprüfstands mit Fahrzeug.
- **Fig. 2**: zeigt schräg von unten eine räumliche Ansicht des Fahrzeugprüfstands mit Fahrzeug gemäß Fig. 1.
- **Fig. 3**: zeigt in einem Teillängsschnitt eine in einem erfindungsgemäßen Fahrzeugprüfstand einsetzbare Beaufschlagungseinheit.
- **Fig. 4**: zeigt in einem Teillängsschnitt eine in einem erfindungsgemäßen Fahrzeugprüfstand einsetzbare weitere Beaufschlagungseinheit.
- **Fig. 5 und 6**: zeigen in einer Vorderansicht und Seitenansicht eine zusätzliche zentrale Abstützung des Fahrzeugs in dem Fahrzeugprüfstand.
- **Fig. 7**: zeigt in einer Seitenansicht eine Beaufschlagungseinheit mit drehbar darin gehaltenem Prüfrad.
- **Fig. 8**: zeigt einen Vertikalschnitt VIII-VIII durch eine Beaufschlagungseinheit mit Prüfrad gemäß Fig. 7.
- **Fig. 9**: zeigt eine räumliche, teilgeschnittene Ansicht einer Beaufschlagungseinheit mit Prüfrad gemäß Fig. 7 und 8.
- **Fig. 10**: zeigt einen Vertikalschnitt durch eine alternative Beaufschlagungseinheit mit drehbar darin gelagerter Felge.

### FIGURENBESCHREIBUNG

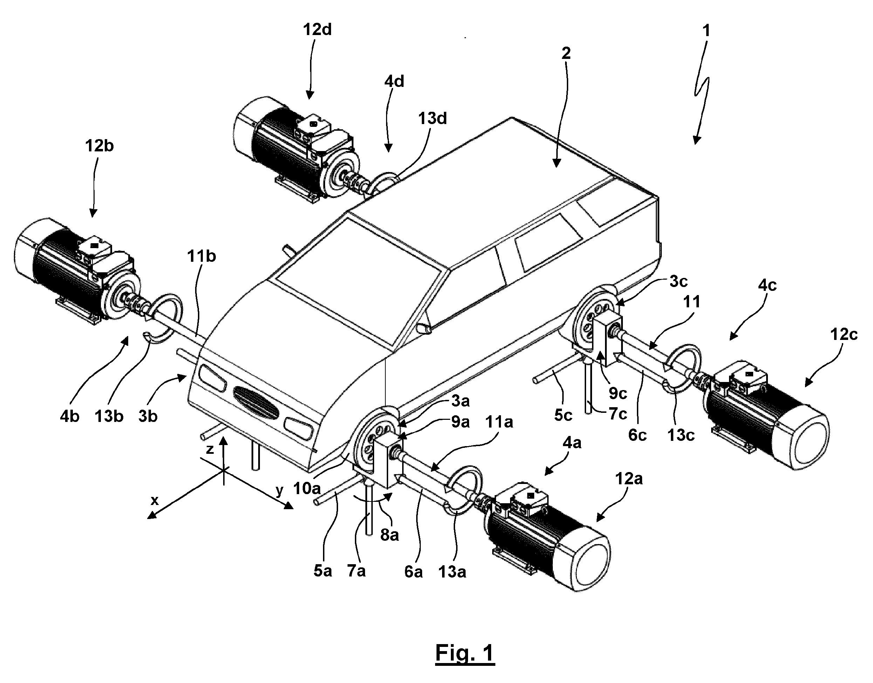

**Fig. 1** zeigt einen Fahrzeugprüfstand 1 mit darin angeordnetem Fahrzeug 2, hier ein Kraftfahrzeug. In den Figuren und der Beschreibung kennzeichnet eine Koordinate x eines orthogonalen Koordinatensystems eine Fahrzeuglängsrichtung, während y eine Fahrzeugquerrichtung und z eine Richtung entsprechend der Fahrzeughochachse kennzeichnet.

Die Prüfung des Fahrzeugs erfolgt mit sämtlichen vier Prüfrädern 3a, 3b, 3c, 3d, bei welchen es sich für das dargestellte Ausführungsbeispiel um die Originalräder handelt. In dem Fahrzeugprüfstand 1 werden über Beaufschlagungseinheiten 4a, 4b, 4c, 4d jeweils Prüflasten erzeugt. Über die Beaufschlagungseinheiten 4 sind an jedem Prüfrad 3 Prüflasten herbeiführbar, insbesondere Längskräfte 5, Seitenführungskräfte 6 und Radaufstandskräfte 7. Ebenfalls möglich ist, dass an den gelenkten Prüfrädern 3 Lenkkräfte 8 (womit auch ein Lenkmoment umfasst sein kann) erzeugt werden.

Für eine Erzeugung der Kräfte 5-8 sind in den Figuren nicht dargestellte Aktuatoren in dem Fahrzeugprüfstand 1 verantwortlich, wobei jeweils ein Aktuator für eine Kraft verantwortlich sein kann oder mehrere Aktuatoren gemeinsam für eine Kraft oder mehrere Kräfte verantwortlich sein können. Die Kräfte 5-8 werden jeweils über einen Lager- und Beaufschlagungskörper 9 auf das Fahrzeug 2 aufgebracht. Gegenüber dem Lager- und Beaufschlagungskörper 9 ist ein Radhaltekörper 10 drehbar abgestützt, an welchem wiederum das Prüfrad 3 drehfest gehalten ist. Der Lager- und Beaufschlagungskörper 9 ist gegenüber den Aktuatoren und der Umgebung geeignet abgestützt und geführt mit den erforderlichen Freiheitsgraden, um die Kräfte 5-8 (womit auch Momente umfasst sein können) auf den Radhaltekörper 10, das Prüfrad 3 und damit das Fahrzeug 2 aufzubringen. Der Radhaltekörper 10 ist jeweils über eine Doppel-Gelenkwelle 11 mit einem zugeordneten Antriebsaggregat 12 zur Erzeugung einer Antriebsdrehzahl 13 oder zur Erzeugung eines Antriebs- oder Bremsmoments gekoppelt. Möglich ist, dass eine Veränderung des Lenkwinkels des Prüfrads 3, insbesondere durch Applikation einer Lenkkraft 8 (oder eines Lenkmoments), einhergeht mit einer gemeinsamen Verschwenkung des Antriebsaggregats 12 mit der Doppel-Gelenkwelle 11, des Lager- und Beaufschlagungskörpers 9 und des Radhaltekörpers 10 um die Lenkachse.

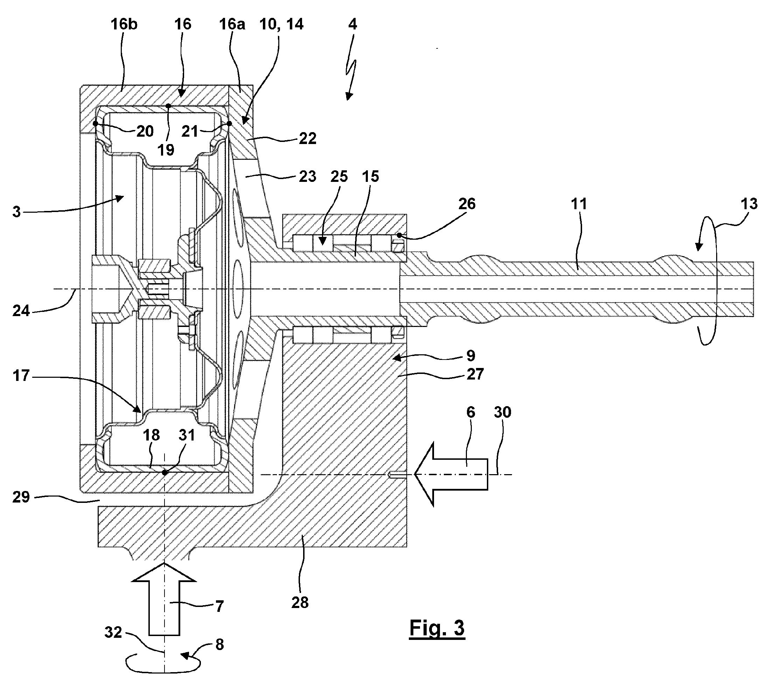

**Fig. 3** zeigt in einem Teil-Längsschnitt eine Beaufschlagungseinheit 4. Der Radhaltekörper 10 ist hier als Radaufnahmekörper 14 ausgebildet. Der Radaufnahmekörper 14 ist mit einem Wellenbereich 15 und einem Trommelbereich 16 gebildet.

In dem Trommelbereich 16 ist das Prüfrad 3 reibschlüssig gehalten. Hierzu ist ein auf eine Felge 17 des Prüfrads 3 aufgezogener Reifen 18 durch Aufpumpen radial mit einer zylindrischen Innenfläche 19 des Trommelbereichs 16 verspannt. Alternativ oder zusätzlich kann der Reifen 18 auch zwischen Ringflächen 20, 21 des Trommelbereichs 16 axial verspannt sein, was ebenfalls durch das Aufpumpen erfolgen kann. Das Prüfrad 3 wird für entleerten Reifen 18 in den Trommelbereich 16 eingebracht und dann aufgepumpt, womit das radiale und/oder axiale Verspannen des Reifens und damit des Prüfrads 3 in dem Trommelbereich 16 erfolgt. Reicht die zwischen der Mantelfläche des Reifens 18 und der Innenfläche 19 wirkende Reibkraft aus, um Seitenführungskräfte zwischen dem Trommelbereich 16 und dem Reifen 18 zu übertragen, kann u. U. auch abweichend zu der dargestellten Ausführungsform die Ringfläche 20 entfallen, womit der Reifen 18 vereinfacht in den Trommelbereich 16 eingeführt werden kann. Sind hingegen beide Ringflächen 20, 21 auch zur Übertragung von Seitenführungskräften 6 erforderlich, kann die Montage trotz der Ringflächen 20, 21 durch das Entleeren des Reifens 18 möglich gemacht werden. Möglich ist aber auch, dass der Trommelbereich 16, wie in Fig. 3 angeordnet, zur Vereinfachung der Montage zweiteilig ausgebildet ist, hier mit einem Bauelement 16a für die Ausbildung der Ringfläche 21 sowie einem weiteren Bauelement 16b für die Ausbildung der Innenfläche 19 sowie der Ringfläche 20. Für diese Ausgestaltung kann zunächst das Bauelement 16b des Trommelbereichs 16 über den Reifen 18 gestülpt werden. Dann wird das Prüfrad 3 mit dem Bauelement 16b an das Bauelement 16a angenähert, womit eine Seitenwand des Reifens 18 zur Anlage kommt an die Ringfläche 21 des Bauelements 16a. Dann kann eine Verbindung der Bauelemente 16a, 16b erfolgen, beispielsweise durch Verschrauben derselben miteinander.

In den Kraftschluss zwischen dem Trommelbereich 16 und der Felge 17 ist für dieses Ausführungsbeispiel der Reifen 18 mit seiner Elastizität, welche auch von dem Innendruck des Reifens abhängig ist, zwischengeschaltet, wodurch realitätsnahe Prüfbedingungen gewährleistet werden können.

Der Wellenbereich 15 und der Trommelbereich 16 sind starr miteinander über einen Flanschbereich 22 verbunden. Der Flanschbereich 22 verfügt über Durchgangsausnehmungen 23, über welche das Prüfrad 3 zur Montage und Demontage und ein Ventil zum Befüllen des Reifens 18 von außen zugänglich sind. Der Trommelbereich 16, der Flanschbereich 22 (bis auf die Durchgangsausnehmungen 23) und der Wellenbereich 15 sind rotationssymmetrisch zu der Rotationsachse 24 des Prüfrads 3 ausgebildet.

Der Radhaltekörper 10 ist in dem Wellenbereich 15 über ein Lager 25 an dem Lager- und Beaufschlagungskörper 9 drehbar gehalten. Das Lager 25 gewährleistet hierbei, dass zwischen Lager- und Beaufschlagungskörper 9 und Radhaltekörper 10 zusätzlich zu dem Drehfreiheitsgrad um die Rotationsachse 24 kein weiterer Freiheitsgrad existiert. Hierzu finden in dem Lager 25 beispielsweise wie dargestellt mehrere Zylinderrollenlager oder auch andere Ausführungen von Lagereinheiten Einsatz, welche auch Axialkräfte aufnehmen können, welche durch Seitenführungskräfte 6 hervorgerufen werden können. Möglich ist auch, dass für die Aufnahme der Radialkräfte und die axiale Abstützung separate Lagereinheiten Einsatz finden. Zur Aufnahme des Lagers 25 besitzt der Lager- und Beaufschlagungskörper 9 ein geeignetes Lagerauge 26.

Über eine geeignete Antriebsverbindung ist der Wellenbereich 15 drehfest mit der Doppel-Gelenkwelle 11 verbunden, welche in Fig. 3 lediglich stark schematisiert dargestellt ist.

In dem mit Fig. 3 dargestellten Längsschnitt ist der Lager- und Beaufschlagungskörper 9 (stark vereinfacht gesagt) mit einem L-förmigen Bereich ausgebildet, wobei in dem oberen Endbereich des vertikalen Schenkels 27 des L das Lagerauge 26 angeordnet ist. Die Länge des Schenkels 27 ist derart, dass der horizontale Schenkel 28 des L mit einem radialen Spalt 29 unterhalb der äußeren Mantelfläche des Trommelbereichs 16 angeordnet ist, so dass sich der Radhaltekörper 10 frei gegenüber dem Lager- und Beaufschlagungskörper 9 drehen kann.

Die Seitenführungskraft 6 wird vorzugsweise mit einer Wirkachse 30 über einen geeigneten Aktuator in den Lager- und Beaufschlagungskörper 9 eingebracht, welche parallel zur Rotationsachse 24 orientiert ist. Die Wirkachse 30 verläuft vorzugsweise durch die Führungsfläche 19 oder einen imaginären mittigen Radaufstandspunkt 31, welcher sich für den Kontakt des Originalrads mit dem Untergrund ergibt. Die Seitenführungskraft 6 wird in dem Endbereich des vertikalen Schenkels 27 eingeleitet, welcher dem horizontalen Schenkel 28 zugewandt ist. Im dem Schenkel 27 abgewandten Endbereich des Schenkels 28 wird in den Lager- und Beaufschlagungskörper 9 die Radaufstandskraft 7 über einen geeigneten Aktuator aufgebracht. Die Wirkachse 32 der Radaufstandskraft 7 ist vertikal orientiert und verläuft vorzugsweise ebenfalls durch den mittigen und imaginären Radaufstandspunkt 31.

Für die Ermöglichung einer Erzeugung der geregelten beaufschlagenden Kräfte, hier der Seitenführungskraft 6 und der Radaufstandskraft 7, verfügt der Lager- und Beaufschlagungskörper 9 über die folgenden Freiheitsgrade:
- Verdrehung des Lager- und Beaufschlagungskörpers 9 um eine Vertikalachse, welche der Lenkachse des Prüfrads 3 und der Wirkachse 32 entspricht, um unterschiedliche Lenkwinkel gewährleisten zu können.
- Verschiebe-Freiheitsgrad entlang der Lenkachse bzw. Wirkachse 32, um Radaufstandskräfte herbeiführen zu können.
- Verschiebe-Freiheitsgrad entlang der Wirkachse 30 für die Aufbringung der Seitenführungskraft 6, wobei sich dieser Verschiebe-Freiheitsgrad je nach eingestelltem Lenkwinkel verändern können muss.

Kommt es im Zuge der Einfederung des Prüfrads 3 zu einer Veränderung des Sturzes des Prüfrads, müssen entsprechende Ausgleichsmöglichkeiten in der Beaufschlagungseinheit 4 vorgesehen sein. Möglich ist hierbei auch, dass derartige geringfügige Anpassungen des Sturzes erfolgen über die elastische Kopplung zwischen der Felge 17 und dem Trommelbereich 16 über den Reifen 18.

Der Trommelbereich 16 des Radhaltekörpers 10 ist vorzugsweise derart bemessen, dass dieser in den Radkasten des Fahrzeugs 2 passt, auch wenn eine Einfederung des Prüfrads 3 mit der Beaufschlagung durch die Radaufstandskraft 7 und/oder eine Veränderung des Lenkwinkels erfolgt.

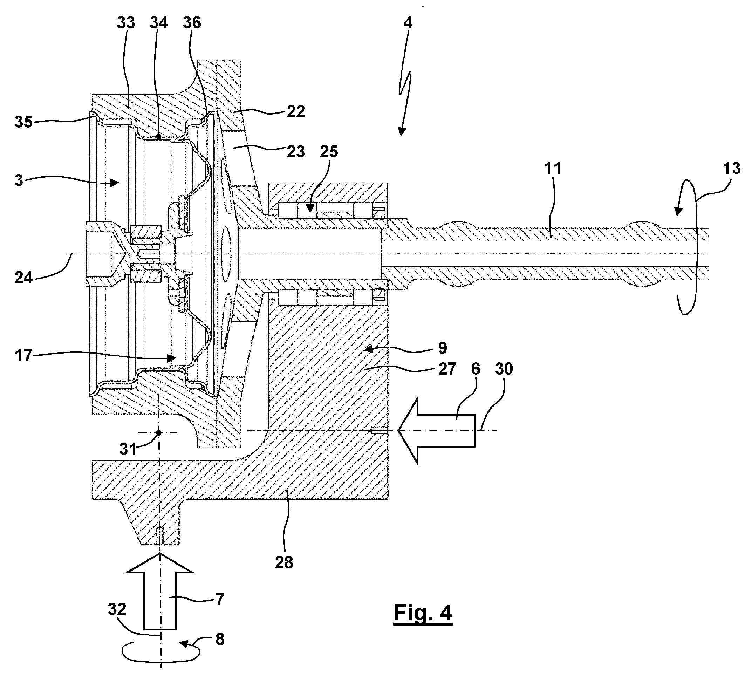

**Fig. 4** zeigt eine alternative Ausgestaltung der Beaufschlagungseinheit 4 in einem Längsschnitt, bei welcher bei ansonsten Fig. 3 entsprechender Ausgestaltung die Kopplung zwischen dem Flanschbereich 22 des Radhaltekörpers 10 und der Felge 17 des Prüfrads 3 modifiziert ist: Hier ist ein Prüfrad 3 ohne Reifen 18 verwendet. Stattdessen greift wie dargestellt ein Koppelkörper 33 in das konturierte Felgenbett 34 ein. Der Koppelkörper 33 ist drehfest an dem Flanschbereich 22 gehalten, beispielsweise angeschraubt. Die Verbindung zwischen dem Koppelkörper 33 und der Felge 17 kann beliebig erfolgen. Beispielsweise kann der Koppelkörper 33 mit zwei Halbschalen gebildet sein, welche radial nach innen gegen das Felgenbett 34 verspannt werden. Alternativ oder kumulativ möglich ist, dass ein axiales Verspannen des Koppelkörpers 33 gegenüber den Hörnern 35, 36 der Felge 17 erfolgt. Beliebige anderweitige Kopplungsmöglichkeiten zwischen Felge 17 und Koppelkörper 23 sind möglich. Um lediglich einige Beispiele zu nennen, kann der Koppelkörper 33 stoffschlüssig mit der Felge 17 verbunden sein, insbesondere durch Anspritzen des Koppelkörpers 33, welcher in diesem Fall beispielsweise aus einem Kunststoff hergestellt ist. Möglich ist auch, dass der Koppelkörper 33 mit der Felge 17 verschraubt oder verschweißt wird.

Der Koppelkörper 33 kann gezielt mit einer Elastizität und/oder Masse ausgestattet sein, um die Elastizität und/oder Masse des Reifens 18 im Übertragungsweg der Kräfte zu dem Fahrzeug 2 zu simulieren.

Für eine andere, in den Figuren nicht dargestellte Ausführungsform erfolgt eine unmittelbare Verbindung des Flanschbereichs 22 mit der Felge 17 oder einer entsprechenden Scheibe, welche an der Achse gehalten ist. Diese unmittelbare Verbindung kann beispielsweise hergestellt werden durch eine Schraubverbindung zwischen Flanschbereich 22 und Felge 17. Möglich ist auch, dass eine Befestigung des Flanschbereichs 22 über die Radbolzen erfolgt, wozu weitere Zwischen- und Haltekörper Einsatz finden können.

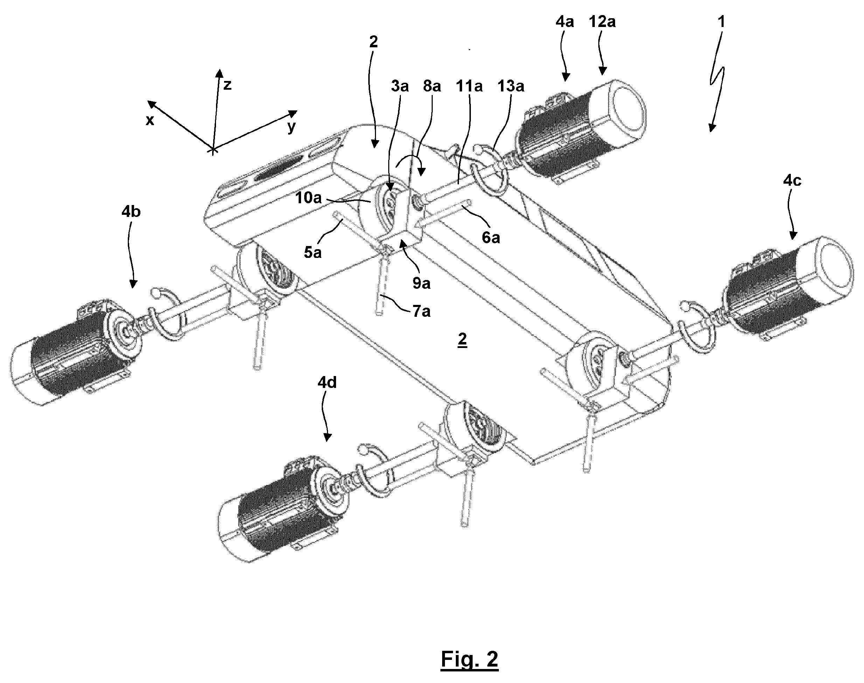

Gemäß Fig. 1 und 2 ist das Fahrzeug ausschließlich über die Beaufschlagungseinheiten 4a bis 4d gegenüber der Umgebung abgestützt.

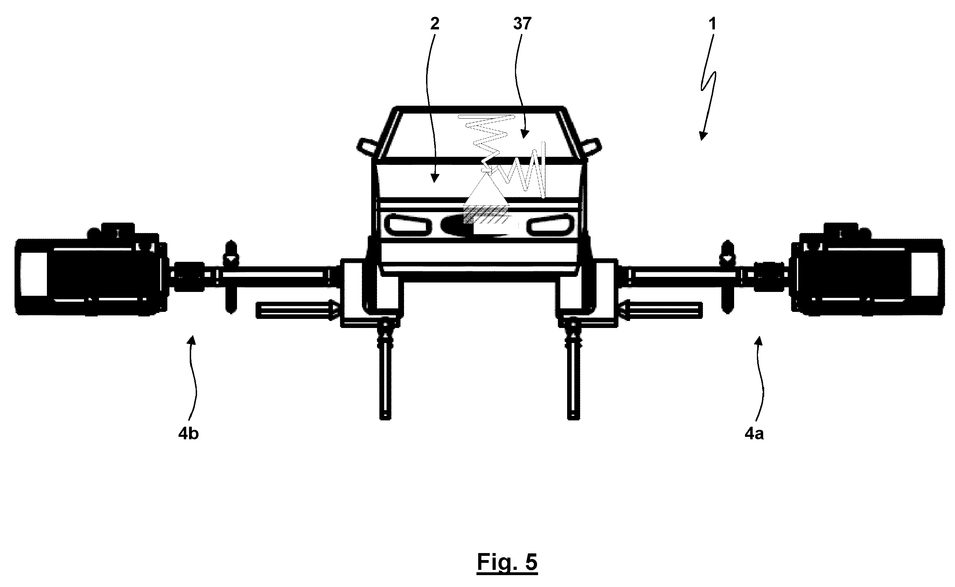

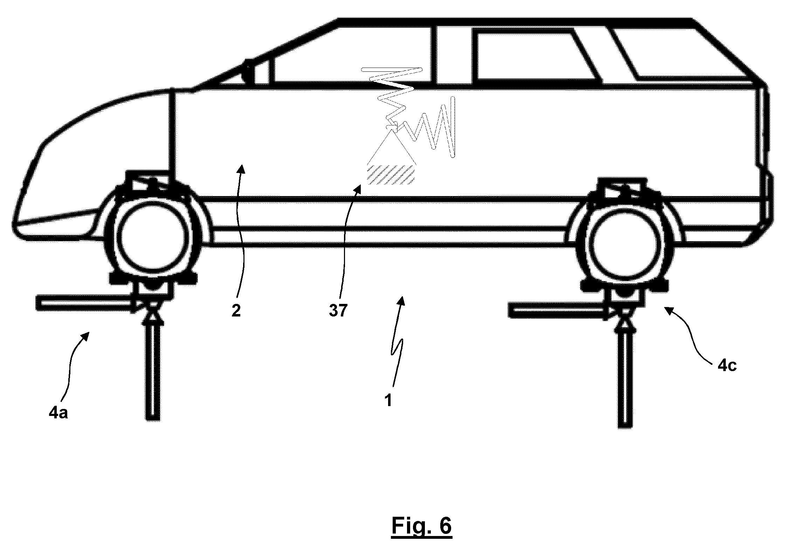

Die **Fig. 5** **und** **6** zeigen schematisch eine zusätzliche Abstützung des Fahrzeugs 2 über eine zentrale Abstützung 37. Diese stützt vorzugsweise das Fahrzeug in seinem Schwerpunkt, einem Längs- oder Querträger, einer A-, B- oder, C-Säule u. ä. ab. Möglich sind hier vielfältige unterschiedliche Ausgestaltungen der zentralen Abstützung 37: Möglich ist, dass die Abstützung, wie in den Fig. 5 und 6 dargestellt, in die unterschiedlichen Raumrichtungen über mindestens ein Federelement erfolgt. Ebenfalls möglich ist, dass über die zentrale Abstützung 37 einzelne Freiheitsgrade festgesetzt sind. Um diesbezüglich lediglich ein Beispiel zu nennen, kann die Position des Fahrzeugs in die Richtungen x, y und z mit oder ohne Feder fixiert sein, während Verschwenkungen des Fahrzeugs um die Achsen x, y und z durch die zentrale Abstützung 37 nicht behindert werden.

In Weiterbildung der Erfindung ist die zentrale Abstützung 37 mit mindestens einem zentralen Aktuator ausgebildet, über welche zusätzliche Kräfte (womit auch Momente umfasst sein können) auf das Fahrzeug 2 aufgebracht werden können, beispielsweise Trägheitskräfte bei Kurvenfahrt oder Beschleunigung oder Abbremsung des Fahrzeugs 2 simuliert werden können. Die zentrale Abstützung 37 erfolgt beispielsweise an einer Art Brücke über dem Fahrzeug.

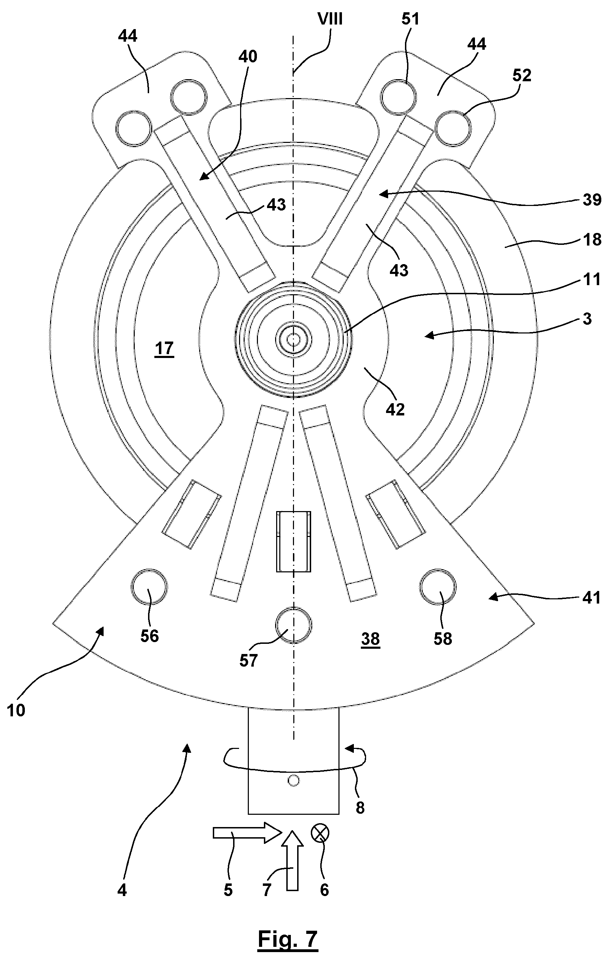

In den Figuren **7 bis 9** ist eine Ausführungsform dargestellt, bei welcher der Kraftfluss zur Erzeugung der Prüflasten, insbesondere der Längskraft 5, Seitenführungskraft 6, der Radaufstandskraft 7 und/oder der Lenkkraft 8, über den Radhaltekörper 10 entkoppelt ist von dem Antrieb des Prüfrads 3 über das Antriebsaggregat 12 und die Doppel-Gelenkwelle 11. Des Weiteren ist das Prüfrad 3 abweichend zu der Ausführungsform gemäß Fig. 3 und 4 nicht drehfest in dem Radhaltekörper 10 gehalten, sondern vielmehr gegenüber diesem drehbar um die Rotationsachse 24 gelagert.

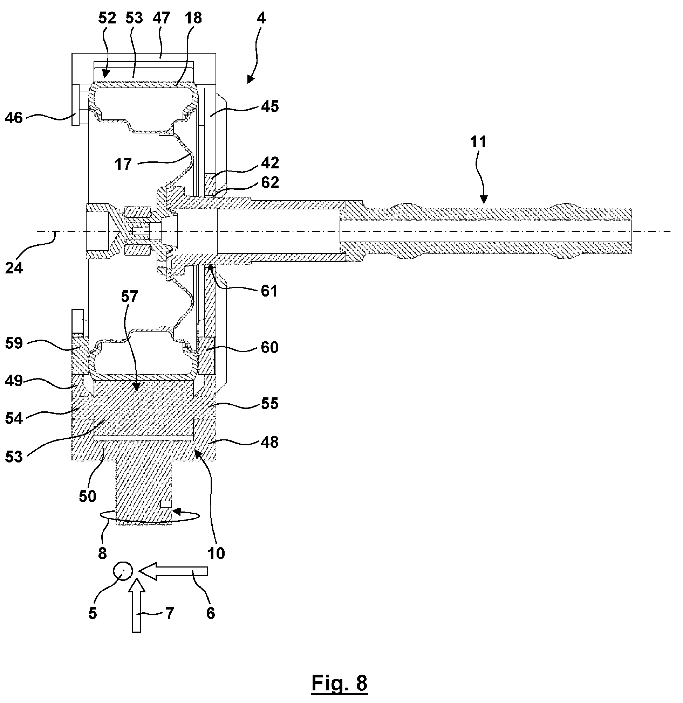

Der Radhaltekörper 10 ist für diese Ausführungsform mit einem Krallenbereich 38 ausgebildet, der oberhalb der Rotationsachse 24 zwei Arme 39, 40 besitzt sowie unterhalb der Rotationsachse 24 einen Aufstandsbereich 41 besitzt. Sowohl die Arme 39, 40 als auch der Aufstandsbereich 41 umschließen in einem Radialschnitt durch das Prüfrad das Prüfrad U-förmig, wie insbesondere in Fig. 8 zu erkennen ist. Das U der Arme 39, 40 ist mit zwei Vertikalschenkeln 45, 46 sowie einem diese verbindenden Grundschenkel 47 gebildet, während das U des Aufstandsbereichs 41 mit zwei Vertikalschenkeln 48, 49 und einem diese verbindenden Grundschenkel 50 gebildet ist. Hierbei erstrecken sich die auf der Außenseite des Fahrzeugs 2 angeordneten Vertikalschenkel 45, 48 radial nach innen bis zu einem Verbindungsring 42, über welche diese starr miteinander verbunden sind. Hingegen besitzen die in dem Radkasten angeordneten Vertikalschenkel 46, 49 des U eine verringerte Erstreckung radial nach innen, wobei diese in ihrem Endbereich ebenfalls über einen Ring miteinander verbunden sein können oder keinerlei Verbindung besitzen können. Die Arme 39, 40 besitzen in dem die Felge 17 überspannenden Radialbereich einen Steg 43 mit konstanter Umfangserstreckung, während diese im Bereich der Mantelfläche des Prüfrads 3 Erweiterungen 44 ausbilden. Die Vertikalschenkel 48, 49 des Aufstandsbereichs 41 sind vorzugsweise kreissegmentförmig ausgebildet, beispielsweise mit einem Kreissegmentwinkel von 80° ± 15°, insbesondere ± 10° oder 5°. Vorzugsweise sind die Arme 39, 40, der Aufstandsbereich 41 und der Verbindungsring 42 einstückig ausgebildet.

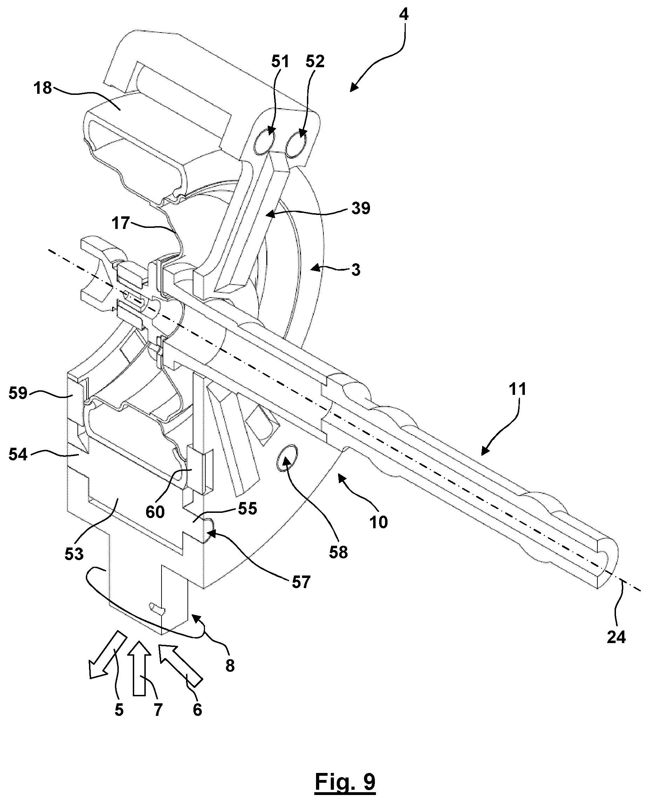

In den Vertikalschenkeln 45, 46 der Arme 39, 40 und im Bereich der Erweiterungen 44 sind an den Armen 39, 40 jeweils zwei Wälzkörper 51, 52 drehbar gelagert. Die Rotationsachsen der Wälzkörper 51, 52 sind parallel zur Rotationsachse 24 orientiert. Insbesondere in Fig. 9 zu erkennen ist, dass die Wälzkörper 51, 52 über einen zylindrischen Kontaktkörper 53 verfügen, an welchem die Mantelfläche des Reifens 18 des Prüfrads 3 abwälzt. Der Kontaktkörper 53 erstreckt sich nahezu über den gesamten Grundschenkel 47. Des Weiteren verfügen die Wälzkörper 51, 52 über endseitige, koaxial zur Rotationsachse 24 angeordnete Lagerzapfen 54, 55. Diese Lagerzapfen 54, 55 sind in Bohrungen der Vertikalschenkel 45, 46 der Arme 39, 40 drehbar gelagert, was unter Ausbildung einer Gleitlagerung oder Zwischenschaltung von Wälzlagern erfolgen kann. Die Wälzkörper 51, 52 sind zwischen den Vertikalschenkeln 45, 46 gefangen, ggf. mit einem geringen Axialspiel und mit einer axialen Lagerung.

Entsprechend sind im Aufstandsbereich 41 an dessen Vertikalschenkeln 48, 49 drei Wälzkörper 56, 57, 58 drehbar gelagert. Während die beiden Wälzkörper 51, 52, welche an einem Arm 39, 40 gelagert sind, einen möglichst geringen Abstand voneinander besitzen, ohne dass diese sich mit den Mantelflächen der Kontaktkörper 53 berühren, besitzen die Wälzkörper 56, 57, 58 einen größeren Abstand in Umfangsrichtung um die Rotationsachse 24. Vorzugsweise sind die Wälzkörper 56, 57, 58 mit einem Umfangswinkel von 30° ± 10°, insbesondere ± 5° von einander beabstandet. Sämtliche Wälzkörper 51, 52, 56, 57, 58 besitzen einen gleichen radialen Abstand von der Rotationsachse 24, wobei der Abstand derart bemessen ist, dass der Reifen 18 des Prüfrads 3 radial zwischen den Wälzkörpern 51, 52, 56, 57, 58 radial verspannt ist. Dieses radiale Verspannen kann erfolgen mittels eines Aufpumpens des Reifens 18 und/oder durch Veränderung der radialen Erstreckung der Vertikalschenkel 45, 46, 48, 49 der Arme 39, 40 und des Aufstandsbereichs 41, was alternativ oder zusätzlich auch genutzt werden kann für eine Anpassung des Radhaltekörpers 10 an Prüfräder 3 unterschiedlicher Geometrien und Durchmesser. Die radial orientierten Arme 39, 40 bilden einen Umfangswinkel von 60° ± 20°, insbesondere ± 10°, aus und sind diametral gegenüberliegend des Aufstandsbereichs 41 angeordnet.

In Fig. 8 lediglich schematisch dargestellt sind zusätzliche, drehbar gegenüber den Vertikalschenkeln 45, 46, 48, 49 um eine radial orientierte Achse gelagerte weitere Wälzkörper 59, 60, zwischen welchen die Seitenflächen des Reifens 18 axial verspannt sind, was ebenfalls durch ein Aufpumpen und/oder durch Einstellen des axialen Abstands der Wälzkörper 59, 60 erfolgen kann. Die Wälzkörper 59, 60 ermöglichen eine Übertragung von Seitenführungskräften 6 von dem Radhaltekörper 10 auf den Reifen 18 und damit auf das Prüfrad 3. In alternativer, nicht dargestellter Ausführungsform können die Wälzkörper 59, 60 entfallen - in diesem Fall können die Wälzkörper 51, 52, 56, 57, 58 mit einem Kontaktkörper 53 ausgestattet sein, welcher zusätzlich zu der zylindrischen Mantelfläche randseitig einen umlaufenden Bund ausbildet, welche den Reifen 18 jeweils auf einer Seite seitlich umgreifen, so dass die Übertragung einer Seitenführungskraft 6 über diesen umlaufenden Bund erfolgen kann. In diesem Fall steht der Radhaltekörper 10 ausschließlich über die Wälzkörper 51, 52, 56, 57, 58 in Wechselwirkung mit dem Prüfrad 3.

Der Verbindungsring 42 verfügt über eine Durchgangsbohrung 61, durch welche die Doppel-Gelenkwelle 11 unter Ausbildung eines radialen Spalts 62 hindurchtritt. Die Doppel-Gelenkwelle 11 hat somit für diese Ausgestaltung keinerlei Verbindung mit dem Radhaltekörper 10. Die Doppel-Gelenkwelle 11 ist in ihrem einen Endbereich drehfest mit der Felge 17 oder einem Achskörper verbunden. Während ohne dynamische Beaufschlagung die reine drehbare Abstützung des Prüfrads 3 auf den Wälzkörpern 56, 57, 58 des Aufstandsbereichs 41 angesichts des Eigengewichts des Fahrzeugs 2 ausreichend wäre, können erhöhte dynamische Prüflasten, insbesondere dynamische Radaufstandskräfte 7, dazu führen, dass zeitweise das Prüfrad 3 den Kontakt zu den Wälzkörpern 56, 57, 58 verliert. Um dies zu vermeiden, ist das Verspannen des Prüfrads 3 auf gegenüberliegenden Seiten einerseits mit dem Aufstandsbereich 41 und andererseits mit den Armen 39, 40 von Vorteil.

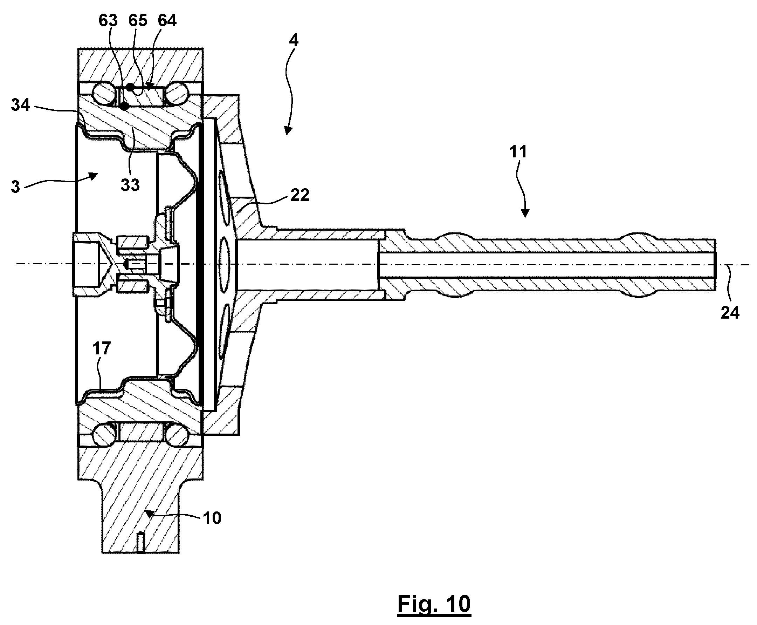

**Fig. 10** zeigt eine alternative Ausgestaltungsform mit einer Beaufschlagungseinheit 4, bei welcher allerdings ebenfalls der Kraftfluss von der Gelenkwelle 11 zu dem Prüfrad 3 nicht über den Radhaltekörper 10 erfolgt. Hier ist die Doppel-Gelenkwelle 11 entsprechend Fig. 4 über einen Flanschbereich 22 drehfest verbunden mit einem Koppelkörper 33, welcher wiederum drehfest mit dem Felgenbett 34 der Felge 17 verbunden ist, so dass letztendlich über die Doppel-Gelenkwelle 11 das Prüfrad 3, welches hier durch die Felge 17 mit Koppelkörper 33 repräsentiert ist, angetrieben werden kann.

Abweichend zu Fig. 4 bildet allerdings gemäß Fig. 10 die äußere Mantelfläche des Koppelkörpers 33 eine Lagerfläche 63 aus, an welcher radial innenliegend und/oder in beide axiale Richtungen ein Lager 64 abgestützt ist. Lediglich exemplarisch ist gemäß Fig. 10 ein Lager 64 dargestellt, welches mit einer Kombination eines Zylinderrollenlagers und Schrägkugellagern gebildet ist, ohne dass eine Einschränkung auf diese Lagereinheiten erfolgen soll. Radial außenliegend ist das Lager 64 an einer innenliegenden Lagerfläche 65 abgestützt, welche von dem Radhaltekörper 10 ausgebildet ist. Der Kraftfluss für die Längskraft 5, die Seitenführungskraft 6, die Radaufstandskraft 7 und/oder die Lenkkraft 8 erfolgt für diese Ausgestaltung somit von dem Radhaltekörper 10 über die Lagerfläche 65, das Lager 64 und die Lagerfläche 63 zu dem Koppelkörper 33 und von diesem zu der Felge 17. Gemäß Fig. 10 erfolgt die Übertragung der Kräfte von dem Radhaltekörper 10 über das Lager 14 zu dem Prüfrad 3 (abweichend zu dem Ausführungsbeispiels gemäß Fig. 4) in der Radebene. Während gemäß den Ausführungsbeispielen Fig. 3, Fig. 4 und Fig. 10 die Wälzkörper des Lagers 25, 64 radial beabstandet von der Rotationsachse 24 um diese rotieren, sind die Rotationsachsen der Wälzkörper 51, 52, 56, 57, 58 ortfest und beabstandet von der Rotationsachse 24 angeordnet.

Mittels des Fahrzeugprüfstands 1 können alternativ oder kumulativ vielfältige unterschiedliche Prüfungen erfolgen. Möglich ist beispielsweise, dass ein Antrieb der Prüfräder 3 der angetriebenen Achse über die Brennkraftmaschine des Fahrzeugs erfolgt, während die Leistung an dem Prüfrad 3 über die Antriebsaggregate 12 in einem Generatorbetrieb abgenommen wird, um eine Leistungsmessung durchzuführen. Mit oder ohne rotierendes Prüfrad 3 infolge des Antriebs durch ein Antriebsaggregat 12 kann mindestens eine Kraft von den Kräften 5-8 appliziert werden, wobei auch möglich ist, dass die Kräfte an den unterschiedlichen Prüfrädern 3a bis 3d unterschiedlich gestaltet werden. Auch möglich ist, dass die Prüfung mit im Betrieb variierenden oder fest vorgegebenen Lenkwinkeln erfolgt. Zusätzlich kann eine Applikation von Trägheitskräften über einen zentralen Aktuator erfolgen. Es versteht sich, dass mit dem Fahrzeugprüfstand 1 eine Beaufschlagung
- lediglich eines Prüfrads 3,
- eines Teils der Prüfräder 3,
- oder sämtlicher Prüfräder 3
mit den Prüflasten und/oder der Antriebsdrehzahl des Antriebsaggregats 12 erfolgen kann. Ziel der Prüfung kann die Prüfung der Original-Räder und Reifen, des Fahrwerks, der Aufhängung, der Karosserie, der Karosserieanbindung, der Längs- und Querträger, des Interieurs, des Motors, der Motorkomponenten, der Aggregate, der Abgasanlage u. ä. sein. Möglich ist auch die Durchführung von Prüfungen für Verbrauchstests, eine Betriebsfestigkeit, die Akustik, die Funktionen, die Lebensdauer u. ä. Um lediglich ein weiteres Einsatzfeld des erfindungsgemäßen Fahrzeugprüfstands zu nennen, kann dieser auch zur Prüfung eines Anhängers, insbesondere eines Caravans, eingesetzt werden, um beispielsweise Untersuchungen zur Fahrdynamik und Fahrstabilität, beispielsweise hinsichtlich der Neigung zu einem Aufschaukeln des Anhängers, durchzuführen.

Erfindungsgemäß kann die Einleitung der Prüflasten bei Verwendung von Original-Bauteilen erfolgen. Ziel der Versuche kann die annähernd reale dynamische Beanspruchung fast sämtlicher Bauteile wie in einem Fahrversuch sein. Möglich ist auch, dass Prüflasten simuliert werden mit einem erhöhten Lastprofil und/oder zeitlich geraffter Dynamik, um ein schnelleres Prüfergebnis, bspw. mit einer verringerten Lastwechselzahl, zu erhalten.

Möglich ist des Weiteren, dass, beispielsweise zur Simulation eines fortwährenden Brems- oder Beschleunigungsvorgangs oder einer Kurvenneigung, dauerhaft ein Paar von Beaufschlagungseinheiten 4 mit einer vertikalen Verschiebung beaufschlagt wird. Beispielsweise kann für die Simulation einer Nickbewegung des Fahrzeugs 2 ein gleichzeitiges Anheben der Beaufschlagungseinheiten 4c, 4d der hinteren Achsen erfolgen.

Vorzugsweise wird mit dem erfindungsgemäßen Fahrzeugprüfstand eine Prüfung bis hin zu maximalen im Fahrbetrieb auftretenden Antriebsdrehzahlen ermöglicht, beispielsweise bis hin zu Fahrgeschwindigkeiten von 250 km/h.

Möglich ist des Weiteren, dass die Abstände der Beaufschlagungseinheiten 4 veränderbar ist, um den Einsatz des Fahrzeugprüfstands für Fahrzeuge unterschiedlicher Spurweite und/oder Achsabstände nutzen zu können. Hierzu können beispielsweise die Beaufschlagungseinheiten 4 auf Schlitten oder Schienen angeordnet werden mit Möglichkeiten zur Fixierung des Freiheitsgrads des Schlittens oder der Führung.

In den Figuren sind die ggf. ebenfalls aufbringbaren Längskräfte 5 nicht dargestellt. Diese wirken in einer horizontalen Ebene mit einer Wirkachse, welche durch den Radaufstandspunkt 31 verläuft. Hierbei kann die Wirkachse mit einer Veränderung des Lenkwinkels konstant bleiben oder sich mit diesem in der horizontalen Ebene verändern.

Im Rahmen der vorliegenden Erfindung umfasst die Radaufstandskraft 7
- sowohl eine Kraftkomponente, welche der statischen Radaufstandskraft infolge des Eigengewichts des Fahrzeugs entspricht,
- als auch dynamische, vertikal orientierte Kräfte, welche über die Radaufstandsfläche in das Fahrzeug eingeleitet werden und durch den mindestens einen Aktuator erzeugt werden, welcher eine Vertikalkraft erzeugt und/oder eine vertikale Verschiebung der Radaufstandsfläche herbeiführt.

Sofern mit der Erfindung ein Antreiben über ein Antriebsaggregat 12 beschrieben oder beansprucht ist, umfasst dies sowohl ein Antreiben mit der Erzeugung eines Antriebsmoments durch das Antriebsaggregat zum Aufrechterhalten oder Fördern der Bewegung des Prüfrads 3 als auch die Erzeugung eines entgegengesetzt wirkenden Moments, über welchen eine Abbremsung des Prüfrads 3 erzeugt wird. Dies kann erfolgen im Rahmen der Simulation von Beschleunigungs- oder Bremsvorgängen. Ebenfalls möglich ist die Leistungsabnahme, was unter Umständen auch mit einer Regeneration durch das Antriebsaggregat 12 erfolgen kann, indem über ein Antriebsaggregat des Fahrzeugs, insbesondere eine Brennkraftmaschine, ein Antriebsmoment erzeugt wird, während über das andere Antriebsaggregat eine Bremswirkung erzeugt wird.

### BEZUGSZEICHENLISTE

- 1: Fahrzeugprüfstand
- 2: Fahrzeug
- 3: Prüfrad
- 4: Beaufschlagungseinheit
- 5: Längskraft
- 6: Seitenführungskraft
- 7: Radaufstandkraft
- 8: Lenkkraft
- 9: Lager- und Beaufschlagungskörper
- 10: Radhaltekörper
- 11: Doppel-Gelenkwelle
- 12: Antriebsaggregat
- 13: Antriebsdrehzahl
- 14: Radaufnahmekörper
- 15: Wellenbereich
- 16: Trommelbereich
- 17: Felge
- 18: Reifen
- 19: Innenfläche
- 20: Ringfläche
- 21: Ringfläche
- 22: Flanschbereich
- 23: Durchgangsausnehmung
- 24: Rotationsachse
- 25: Lager
- 26: Lagerauge
- 27: Schenkel
- 28: Schenkel
- 29: Spalt
- 30: Wirkachse
- 31: Radaufstandspunkt
- 32: Wirkachse
- 33: Koppelkörper
- 34: Felgenbett
- 35: Horn
- 36: Horn
- 37: zentrale Abstützung
- 38: Krallenbereich
- 39: Arm
- 40: Arm
- 41: Aufstandsbereich
- 42: Verbindungsring
- 43: Steg
- 44: Erweiterung
- 45: Vertikalschenkel
- 46: Vertikalschenkel
- 47: Grundschenkel
- 48: Vertikalschenkel
- 49: Vertikalschenkel
- 50: Grundschenkel
- 51: Wälzkörper
- 52: Wälzkörper
- 53: Kontaktkörper
- 54: Lagerzapfen
- 55: Lagerzapfen
- 56: Wälzkörper
- 57: Wälzkörper
- 58: Wälzkörper
- 59: Wälzkörper
- 60: Wälzkörper
- 61: Durchgangsbohrung
- 62: Spalt
- 63: Lagerfläche
- 64: Lager
- 65: Lagerfläche

## Patentansprüche

1. Fahrzeugprüfstand (1) zur dynamischen Beanspruchung eines Fahrzeugs (2), wobei mindestens ein Aktuator vorhanden ist, der an mindestens einem Prüfrad (3) des Fahrzeugs (2) im Fahrbetrieb wirkende Prüflasten simuliert, wobei
a) eine Beaufschlagungseinheit (4) für ein Prüfrad (3)
aa) mindestens einen Aktuator, der an dem Prüfrad (3) im Fahrbetrieb wirkende Prüflasten simuliert, und
ab) ein in Antriebsverbindung mit dem Prüfrad stehendes Antriebsaggregat (12) zum Antrieb des Prüfrads (3) mit einer Antriebsdrehzahl (13)
aufweist, und
b) eine Steuervorrichtung vorhanden ist, über welche gleichzeitig
ba) der Antrieb des Prüfrads (3) durch das Antriebsaggregat (12) mit der Antriebsdrehzahl (13) und
bb) die Simulation der Prüflast an dem Prüfrad (3) durch den mindestens einen Aktuator
ansteuerbar ist,
**dadurch gekennzeichnet, dass**
c)
ca) mindestens ein Prüfrad (3) drehbar in einem Radhaltekörper (10) aufgenommen ist und die Beaufschlagung des Prüfrads mit mindestens einer Prüflast über den Radhaltekörper (10) erfolgt, wobei das Prüfrad (3) verteilt über den Umfang und auf gegenüberliegenden Seiten spielfrei an mehreren gegenüber einem Grundkörper des Radhaltekörpers (10) gelagerten Wälzkörpern (51, 52, 56, 57, 58) abgestützt ist,
oder
cb) die Beaufschlagungseinheit (4) einen Radhaltekörper (10) aufweist, in oder an dem das Prüfrad (3) drehfest gehalten ist, und einen Lager- und Beaufschlagungskörper (9) aufweist, an dem der Radhaltekörper (10) drehbar gelagert ist, wobei der mindestens eine Aktuator den Lager- und Beaufschlagungskörper (9) mit mindestens einer Prüflast beaufschlagt und wobei sowohl der Kraftfluss von dem Antriebsaggregat (12) als auch der Kraftfluss von dem mindestens einen Aktuator über den Radhaltekörper (10) zu dem Prüfrad (3) verläuft, und
d) die mindestens eine beaufschlagende Prüflast des Aktuators eine Längskraft (5) und/oder eine Seitenführungskraft (6) ist.

2. Fahrzeugprüfstand (1) nach Anspruch 1, **dadurch gekennzeichnet, dass** der Kraftfluss von dem Antriebsaggregat (12) zu dem Prüfrad (3) von dem Kraftfluss der Beaufschlagungseinheit (4) für die Prüflast zu dem Prüfrad (3) entkoppelt ist.

3. Fahrzeugprüfstand (1) nach Anspruch 2, **dadurch gekennzeichnet, dass** der Kraftfluss von dem Antriebsaggregat (12) zu dem Prüfrad (3) über eine Gelenkwelle (11) verläuft und der Kraftfluss der Beaufschlagungseinheit (4) zu dem Prüfrad (3) über einen Radhaltekörper (10) verläuft.

4. Fahrzeugprüfstand (1) nach Anspruch 1, **dadurch gekennzeichnet, dass** der Radhaltekörper (10) mit mindestens einem Arm (39, 40) ausgebildet ist, an welchem radial außenliegend ein Wälzkörper (51, 52) gelagert ist.

5. Fahrzeugprüfstand (1) nach Anspruch 1 oder 4, **dadurch gekennzeichnet, dass** der Abstand mindestens eines Wälzkörpers (51, 52, 56, 57, 58) von der Rotationsachse (24) des Prüfrades (3) einstellbar ist.

6. Fahrzeugprüfstand (1) nach Anspruch 1, 4 oder 5, **dadurch gekennzeichnet, dass** das Prüfrad (3) mit dem Reifen (18) gebildet ist und in dem Radhaltekörper (10) der Reifen (18) radial und axial verspannt ist.

7. Fahrzeugprüfstand (1) nach einem der Ansprüche 1 bis 6, **dadurch gekennzeichnet, dass** der Radhaltekörper (10) eine Ausnehmung (Durchgangsbohrung 61) besitzt, durch welches sich ein Antriebselement für das Prüfrad (3) ohne Kontakt mit dem Radhaltekörper (10) hindurch erstreckt.

8. Fahrzeugprüfstand (1) nach einem der vorhergehenden Ansprüche, **dadurch gekennzeichnet, dass** der mindestens eine Aktuator als Prüflast
a) eine Radaufstandskraft (7) und/oder
b) eine Lenkkraft (8)
aufbringt.

9. Fahrzeugprüfstand (1) nach Anspruch 8, **dadurch gekennzeichnet, dass** der mindestens eine Aktuator die Radaufstandskraft (7) mit einer Wirkachse (32) erzeugt, welche durch die Drehachse (24) des Radhaltekörpers (10) und einen imaginären Aufstandspunkt (31) des Prüfrades (3) verläuft.

10. Fahrzeugprüfstand (1) nach Anspruch 8 oder 9, **dadurch gekennzeichnet, dass** der mindestens eine Aktuator die Seitenführungskraft (6) mit einer Wirkachse (30) erzeugt, welche durch den imaginären Aufstandspunkt (31) des Prüfrades (3) verläuft.

11. Fahrzeugprüfstand (1) nach einem der vorhergehenden Ansprüche, **dadurch gekennzeichnet, dass** das Antriebsaggregat (12) über eine Doppel-Gelenkwelle (11) mit dem Prüfrad oder Radhaltekörper (10) gekoppelt ist.

12. Fahrzeugprüfstand (1) nach Anspruch 1 oder einem der Ansprüche 4 bis 11, **dadurch gekennzeichnet, dass** das Prüfrad (3) in dem Radhaltekörper (10) durch Aufpumpen eines Reifens (12) des Prüfrades (3) verspannt ist.

13. Fahrzeugprüfstand (1) nach einem der Ansprüche 8 bis 12, **dadurch gekennzeichnet, dass** das Prüfrad (3) im Bereich einer Felge (17) an dem Radhaltekörper (10) befestigt ist.

14. Fahrzeugprüfstand (1) nach einem der Ansprüche 8 bis 13, **dadurch gekennzeichnet, dass** das Prüfrad (3) an einem Koppelkörper (33) des Radhaltekörpers (10) drehfest gehalten ist, wobei der Koppelkörper (33) an der Mantelfläche der Felge (17) befestigt ist.

15. Fahrzeugprüfstand (1) nach einem der vorhergehenden Ansprüche, **dadurch gekennzeichnet, dass** das Fahrzeug (2) über eine zentrale Abstützung (37) gegenüber der Umgebung abgestützt ist.

16. Fahrzeugprüfstand (1) nach Anspruch 15, **dadurch gekennzeichnet, dass** die zentrale Abstützung (37) mit einem zentralen Aktuator ausgebildet ist, über welchen Kräfte in das Fahrzeug (2) einleitbar sind.

17. Fahrzeugprüfstand (1) nach Anspruch 15 oder 16, **dadurch gekennzeichnet, dass** der zentrale Aktuator mit einem Betätigungsgestänge oder einem aufblasbaren Kissen oder Luftbalg gebildet ist.

18. Fahrzeugprüfstand (1) nach Anspruch 1 oder einem der Ansprüche 4 bis 17, **dadurch gekennzeichnet, dass** der Radhaltekörper (10) zur Simulation eines Lenkwinkels und/oder einer Lenkbewegung des Prüfrades (3) um eine Vertikalachse verschwenkbar ist.

19. Fahrzeugprüfstand (1) nach Anspruch 18, **dadurch gekennzeichnet, dass** das Antriebsaggregat (12), über welches der Radhaltekörper (10) oder das Prüfrad mit einer Antriebsdrehzahl (13) antreibbar ist, gemeinsam mit dem Radhaltekörper (10) zur Simulation eines Lenkwinkels und/oder einer Lenkbewegung des Prüfrades (3) um eine Vertikalachse verschwenkbar ist.

20. Fahrzeugprüfstand (1) nach einem der vorhergehenden Ansprüche, **dadurch gekennzeichnet, dass** mindestens ein Aktuator und/oder der zentrale Aktuator mit einem Hexapod gebildet ist/sind.

21. Fahrzeugprüfstand (1) nach einem der vorhergehenden Ansprüche, **dadurch gekennzeichnet, dass** der Radhaltekörper (10) als Radaufnahmekörper (14) ausgebildet ist, welcher eine Felge (17) oder einen Reifen (18) des Prüfrades (3) umgibt.

22. Fahrzeugprüfstand (1) nach einem der Ansprüche 8 bis 21, **dadurch gekennzeichnet, dass** ein Kraftfluss für eine Beaufschlagung des Fahrzeugs (2) mit einer Prüflast
a) von einem Aktuator für eine Radaufstandskraft (7) über
b) den Lager- und Beaufschlagungskörper (9),
c) ein Lager (25) zwischen dem Lager- und Beaufschlagungskörper (9) und dem Radhaltekörper (10) oder Radaufnahmekörper (14) und
d) den Radhaltekörper (10) oder Radaufnahmekörper (14)
e) zu dem Prüfrad (3)
erfolgt.

23. Fahrzeugprüfstand (1) nach einem der vorhergehenden Ansprüche 8 bis 22, **dadurch gekennzeichnet, dass** der Lager- und Beaufschlagungskörper (9) L-förmig ausgebildet ist, wobei in einem Endbereich des vertikalen Schenkels (27) des L das Lager (25) angeordnet ist und ein Endbereich des horizontalen Schenkels (28) des L geringfügig unterhalb eines imaginären Aufstandspunkts (31) des Prüfrades (3) angeordnet ist.

## Claims

1. Vehicle test stand (1) for dynamically biasing a vehicle (2), wherein at least one actuator is provided which simulates test loads which are effective during a driving mode at at least one test wheel (3) of the vehicle (2) and wherein
a) a biasing unit (4) for one test wheel (3) comprises
aa) at least one actuator which simulates test loads which are effective during a driving mode at the test wheel (3), and
ab) a driving aggregate (12) being in driving connection with the test wheel for driving the test wheel (3) with a rotational speed (13),
and
b) a control device is provided by which it is possible to control at the same time
ba) the driving of the test wheel (3) by the driving aggregate (12) with the rotational speed (13) and
bb) the simulation of the test load at the test wheel (3) by the at least one actuator
**characterised in that**
c)
ca) at least one test wheel (3) is rotatably accommodated in a wheel holding body (10) and the test wheel is biased with at least one test load via the wheel holding body (10), wherein the test wheel (3) is supported without play at a plurality of rolling bodies (51, 52, 56, 57, 58) which are supported at the base body of the wheel holding body (10), dispersed in circumferential direction and arranged on opposite sides,
or
cb) the biasing unit (4) comprises a wheel holding body (10) in or at which the test wheel (3) is held with a fixation against rotation and the biasing unit (4) comprises a bearing and biasing body (9) at which the wheel holding body (10) is supported for being rotated, wherein the at least one actuator biases the bearing and biasing body (9) with at least one test load and wherein the wheel holding body (10) is integrated both in the force flow from the driving aggregate (12) to the test wheel (3) as well as in the force flow from the at least one actuator to the test wheel (3), and
d) the at least one biasing test load of the actuator is a longitudinal force (5) and/or a lateral guiding force (6).

2. Vehicle test stand (1) of claim 1, **characterised in that** force flow from the driving aggregate (12) to the test wheel (3) is decoupled from the force flow of the biasing unit (4) for the test load to the test wheel (3).

3. Vehicle test stand (1) of claim 2, **characterised in that** the force flow from the driving aggregate (12) to the test wheel (3) runs over an articulated shaft or cardan shaft (11) and the force flow from the biasing unit (4) to the test wheel (3) runs over a wheel holding body (10).

4. Vehicle test stand (1) of claim 1, **characterised in that** the wheel holding body (10) is formed with at least one arm (39, 40) at which on the radial outer side a rolling body (51, 52) is supported.

5. Vehicle test stand (1) of claim 1 or 4, **characterised in that** the distance of at least one rolling body (51, 52, 56, 57, 58) from the axis of rotation (24) of the test wheel (3) is adjustable.

6. Vehicle test stand (1) of claim 1, 4 or 5, **characterised in that** the test wheel (3) is formed with the tyre (18) and the tyre (18) is axially and radially clamped in the wheel holding body (10).

7. Vehicle test stand (1) of one of claims 1 to 6, **characterised in that** the wheel holding body (10) comprises a recess (through bore 61) through which a driving element for the test wheel (3) extends without any contact with the wheel holding body (10).

8. Vehicle test stand (1) of one of the preceding claims, **characterised in that** the at least one actuator applies as a test load
a) a vertical wheel contact force (7) and/or
b) a steering force (8).

9. Vehicle test stand (1) of claim 8, **characterised in that** the at least one actuator produces the vertical wheel contact force (7) with a line of action (32) which runs through the axis of rotation (24) of the wheel holding body (10) and an imaginary contact point (31) of the test wheel (3).

10. Vehicle test stand (1) of claim 8 or 9, **characterised in that** the at least one actuator produces the lateral guiding force (6) with a line of action (30) which runs through the imaginary contact point (31) of the test wheel (3).

11. Vehicle test stand (1) of one of the preceding claims, **characterised in that** the driving aggregate (12) is coupled by a cardan shaft or double articulating shaft (11) to the test wheel or to the wheel holding body (10).

12. Vehicle test stand (1) of claim 1 or one of claims 4 to 11, **characterised in that** the test wheel (3) is clamped in the wheel holding body (10) by inflation of a tyre (12) of the test wheel (3).

13. Vehicle test stand (1) of one of claims 8 to 12, **characterised in that** in the region of a rim (17) the test wheel (3) is mounted or fixed to the wheel holding body (10).

14. Vehicle test stand (1) of one of claims 8 to 13, **characterised in that** the test wheel (3) is held for being fixed against rotation at a coupling body (33) of the wheel holding body (10), wherein the coupling body (33) is fixed to the outer surface of the rim (17).

15. Vehicle test stand (1) of one of the preceding claims, **characterised in that** the vehicle (2) is supported by a central support (37) against the environment.

16. Vehicle test stand (1) of claim 15, **characterised in that** the central support (37) is formed with a central actuator by which it is possible to introduce forces into the vehicle (2).

17. Vehicle test stand (1) of claim 15 or 16, **characterised in that** the central actuator is formed with at least one actuating bar, linkage or rod or by an inflatable cushion or air bellow.

18. Vehicle test stand (1) of claim 1 or one of claims 4 to 17, **characterised in that** the wheel holding body (10) is pivotable about a vertical axis for simulating a steering angle and/or a steering movement of the test wheel (3).

19. Vehicle test stand (1) of claim 18, **characterised in that** the driving aggregate (12) by which it is possible to drive the wheel holding body (10) or the test wheel with a driving rotational velocity (13) can be pivoted in common with the wheel holding body (10) about a vertical axis for simulating a steering angle and/or a steering movement of the test wheel (3).

20. Vehicle test stand (1) of one of the preceding claims, **characterised in that** at least one actuator and/or the central actuator is formed with a hexapod.

21. Vehicle test stand (1) of one of the preceding claims, **characterised in that** the wheel holding body (10) is a wheel accommodating body (14) which encloses a rim (17) or a tyre (18) of the test wheel (3).

22. Vehicle test stand (1) of one of claims 8 to 21, **characterised in that** a force flow for biasing the vehicle (2) with a test load is provided
a) from an actuator for the vertical wheel contact force (7) via
b) the bearing and biasing body (9),
c) a bearing (25) arranged between the bearing and biasing body (9) and the wheel holding body (10) or wheel accommodating body (14) and
d) the wheel holding body (10) or wheel accommodating body (14)
e) to the test wheel (3).

23. Vehicle test stand (1) of one of claims 8 to 22, **characterised in that** the bearing and biasing body (9) is L-shaped, wherein the bearing (25) is arranged in one end region of the vertical leg (27) of the L and one end region of the horizontal leg (28) of the L is arranged slightly below an imaginary contact point (31) of the test wheel (3).

## Revendications

1. Banc d'essai de véhicule (1) destiné à soumettre un véhicule (2) à des contraintes dynamiques, au moins un actionneur étant présent, qui simule des charges d'essai agissant sur au moins une roue d'essai (3) du véhicule (2) pendant la marche,
a) une unité d'application (4) pour une roue d'essai (3)
aa) présentant au moins un actionneur qui simule des charges d'essai agissant sur la roue d'essai (3) pendant la marche, et
ab) un groupe d'entraînement (12) en relation d'entraînement avec la roue d'essai pour l'entraînement de la roue d'essai (3) à une vitesse d'entraînement (13),
et
b) un dispositif de commande étant présent, par le biais duquel, simultanément,
ba) l'entraînement de la roue d'essai (3) peut être piloté par le groupe d'entraînement (12) à la vitesse d'entraînement (13) et
bb) la simulation de la charge d'essai sur la roue d'essai (3) peut être pilotée par l'actionneur au moins au nombre de un,
**caractérisé en ce que**
c)
ca) au moins une roue d'essai (3) est logée en rotation dans un corps de retenue de roue (10), et l'application exercée sur la roue d'essai s'effectue avec au moins une charge d'essai par le bais du corps de retenue de roue (10), la roue d'essai (3) étant soutenue,de façon répartie sur la périphérie et sur des côtés opposés sans jeu, sur plusieurs corps de roulement (51, 52, 56, 57, 58) supportés par rapport à un corps de base du corps de retenue de roue (10),
ou
cb) l'unité d'application (4) présente un corps de retenue de roue (10), dans ou sur lequel la roue d'essai (3) est retenue bloquée en rotation, et présente un corps de support et d'application (9) sur lequel le corps de retenue de roue (10) est supporté en rotation, l'actionneurau moins au nombre de un expose le corps de support et d'application (9) à au moins une charge d'essai, et le flux des forces en provenancedu groupe d'entraînement (12) ainsi que le flux des forces en provenance de l'actionneurau moins au nombre de uns'écoulantvers la roue d'essai (3) en passant par lecorps de retenue de roue (10), et
d) la charge d'essai d'application au moins au nombre de un de l'actionneur est une force longitudinale (5) et/ou une force de guidage latéral (6).

2. Banc d'essai de véhicule (1) selon la revendication 1, **caractérisé en ce que** le flux des forces en provenancedugroupe d'entraînement (12) en direction de la roue d'essai (3) est découplé du flux des forces de l'unité d'application (4) pour la roue d'essaien direction de la roue d'essai (3).

3. Banc d'essai de véhicule (1) selon la revendication 2, **caractérisé en ce que** le flux des forces en provenance du groupe d'entraînement (12) en direction de la roue d'essai (3) passe par un arbre articulé (11), et le flux des forces de l'unité d'application (4) en direction de la roue d'essai (3) passe par un corps de retenue de roue (10).

4. Banc d'essai de véhicule (1) selon la revendication 1, **caractérisé en ce que** le corps de retenue de roue (10) est constitué avec au moins un bras (39, 40) sur lequel un corps de roulement (51, 52) est supporté à l'extérieur radialement.

5. Banc d'essai de véhicule (1) selon la revendication 1 ou 4, **caractérisé en ce que** la distance séparant au moins un corps de roulement (51, 52, 56, 57, 58) et l'axe de rotation (24) de la roue d'essai (3) est réglable.

6. Banc d'essai de véhicule (1) selon la revendication 1, 4 ou 5, **caractérisé en ce que** la roue d'essai (3) est formée avec le pneu (18), et le pneu (18) est serré radialement et axialement dans le corps de retenue de roue (10).

7. Banc d'essai de véhicule (1) selon l'une des revendications 1 à 6, **caractérisé en ce que** lecorps de retenue de roue (10) possède un creux (trou de passage 61) à travers lequel s'étend un élément d'entraînement de la roue d'essai (3) sans contact avec le corps de retenue de roue (10).

8. Banc d'essai de véhicule (1) selon l'une des revendications précédentes, **caractérisé en ce que** l'actionneur au moins au nombre de un applique en tant que charge d'essai
a) une force d'appui de roue (7) et/ou
b) une force de braquage (8).

9. Banc d'essai de véhicule (1) selon la revendication 8, **caractérisé en ce que** l'actionneur au moins au nombre de un produit la force d'appui de roue (7) avec un axe actif (32) qui traverse l'axe de rotation (24) du corps de retenue de roue (10) et un point d'appui (31) imaginaire de la roue d'essai (3).

10. Banc d'essai de véhicule (1) selon la revendication 8 ou 9, **caractérisé en ce que** l'actionneur au moins au nombre de un produit la force de guidage latéral (6) avec un axe actif (30) qui traverse le point d'appui (31) imaginaire de la roue d'essai (3).

11. Banc d'essai de véhicule (1) selon l'une des revendications précédentes, **caractérisé en ce que** le groupe d'entraînement (12) est couplé à la roue d'essai ou au corps de retenue de roue (10) par le biais d'un arbre à double articulation (11).

12. Banc d'essai de véhicule (1) selon la revendication 1 ou l'une des revendications 4 à 11, **caractérisé en ce que** la roue d'essai (3) est serrée dans le corps de retenue de roue (10) par le gonflage d'un pneu (12) de la roue d'essai (3).

13. Banc d'essai de véhicule (1) selon l'une des revendications 8 à 12, **caractérisé en ce que** la roue d'essai (3) est fixée dans la zone d'une jante (17) sur le corps de retenue de roue (10).

14. Banc d'essai de véhicule (1) selon l'une des revendications 8 à 13, **caractérisé en ce que** la roue d'essai (3) est retenue bloquée en rotation sur un corps de couplage (33) du corps de retenue de roue (10), le corps de couplage (33) étant fixé sur la surface d'enveloppe de la jante (17).

15. Banc d'essai de véhicule (1) selon l'une des revendications précédentes, **caractérisé en ce que** levéhicule (2) est supporté par rapport à l'environnement par le biais d'un appui (37) central.

16. Banc d'essai de véhicule (1) selon la revendication 15, **caractérisé en ce que** l'appui (37) central est constitué avec un actionneur central par le biais duquel des forces peuvent être introduites dans le véhicule (2).

17. Banc d'essai de véhicule (1) selon la revendication 15 ou 16, **caractérisé en ce que** l'actionneur central est formé avec une tringlerie d'actionnement ou un coussin gonflable ou un soufflet pneumatique.

18. Banc d'essai de véhicule (1) selon la revendication 1 ou l'une des revendications 4 à 17, **caractérisé en ce que,** pour la simulation d'un angle de braquage et/ou d'un mouvement de braquage de la roue d'essai (3), le corps de retenue de roue (10) peut pivoter autour d'un axe vertical.

19. Banc d'essai de véhicule (1) selon la revendication 18, **caractérisé en ce que** le groupe d'entraînement (12) par le biais duquel le corps de retenue de roue (10) ou la roue d'essai peut être entraîné(e) à une vitesse d'entraînement (13) peut pivoter conjointement avec le corps de retenue de roue (10) autour d'un axe vertical pour la simulation d'un angle de braquage et/ou d'un mouvement de braquage de la roue d'essai (3).

20. Banc d'essai de véhicule (1) selon l'une des revendications précédentes, **caractérisé en ce qu**' au moins un actionneur et/ou l'actionneur central est/sont formé(s) d'un hexapode.

21. Banc d'essai de véhicule (1) selon l'une des revendications précédentes, **caractérisé en ce que** le corps de retenue de roue (10) est constitué en tant que corps de logement de roue (14) qui entoure une jante (17) ou un pneu (18) de la roue d'essai (3).

22. Banc d'essai de véhicule (1) selon l'une des revendications 8 à 21, **caractérisé en ce qu**'un flux des forces destiné à exposer le véhicule (2) à une charge d'essai est effectué
a) en provenance d'un actionneur pour une force d'appui de roue (7) par le biais
b) du corps de support et d'application (9),
c) d'un support (25) entre le corps de support et d'application (9) et le corps de retenue de roue (10) ou le corps de logement de roue (14) et
d) du corps de retenue de roue (10) ou du corps de logement de roue (14)
e) en direction de la roue d'essai (3).

23. Banc d'essai de véhicule (1) selon l'une des revendications 8 à 22, **caractérisé en ce que** le corps de support et d'application (9) est constitué en forme de L, le palier (25) étant disposé dans une zone d'extrémité de la branche verticale (27) du L, et une zone d'extrémité de la branche horizontale (28) du L étant disposée légèrement au-dessous d'un point d'appui (31) imaginaire de la roue d'essai (3).
